# EUROPEAN PATENT SPECIFICATION

(11) **EP 3 765 987 B1**
(45) Date of publication and mention of the grant of the patent: **01.10.2025**
(21) Application number: 18711935.9
(22) Date of filing: 16.03.2018
(51) Int. Cl.: G06F 21/62, G06F 16/245, G06F 16/25

(54) **SYSTEMS AND METHODS OF QUERYING A FEDERATED DATABASE IN CONFORMANCE WITH JURISDICTIONAL PRIVACY RESTRICTIONS**
SYSTEME UND VERFAHREN ZUR ABFRAGE EINER FÖDERIERTEN DATENBANK IN ÜBEREINSTIMMUNG MIT GESETZLICHEN DATENSCHUTZEINSCHRÄNKUNGEN
SYSTÈMES ET PROCÉDÉS D'INTERROGATION D'UNE BASE DE DONNÉES FÉDÉRÉE CONFORMÉMENT À DES RESTRICTIONS DE CONFIDENTIALITÉ JURIDICTIONNELLE

(43) Date of publication of application: 20.01.2021
(73) Proprietor: Telefonaktiebolaget LM Ericsson (publ), 164 83 Stockholm (SE)
(72) Inventor: GUSTAFSSON, Harald, 223 63 LUND (SE); ANGELSMARK, Ola, 271 57 YSTAD (SE); BERG, Rodrigo, SE-254 53 Helsingborg (SE)
(74) Representative: Ericsson
(86) International application number: PCT/EP2018/056704
(87) International publication number: WO 2019/174747

(56) References cited:
- US-A1- 2005 108 526
- US-A1- 2012 303 616
- US-A1- 2013 198 857

## Description

### TECHNICAL FIELD

The present disclosure generally relates to databases, and in particular to querying a federated database in conformance with jurisdictional privacy restrictions.

### BACKGROUND

Companies and organizations in many business sectors such as healthcare, e-commerce, government, and retail are entrusted with identifiable information (e.g., personal information, private information, confidential information, or the like) that makes preserving the privacy of this information of utmost concern to these entities. Most often, these entities specify and define how the privacy of this information is to be preserved.

The authors of a white paper entitled "Hippocratic Database: A Privacy-Aware Database" proposed a database architecture that uses metadata consisting of privacy policies and privacy authorizations stored in a respective privacy-policies table and privacy authorization table. N. Ghani, Z. Sidek, Hippocratic Database: A Privacy-Aware Database, Int'I J. Computer Info. Engineering, vol. 2, No. 6 (2008). The authors describe a framework in which the database performs privacy checking during query processing. For instance, the database checks whether the user who issued the query is authorized to access the database. It also checks whether the query accessed only attributes that are explicitly listed in the privacy-authorization table. Also, the database only allows access to information in the database whose purpose attribute includes the purpose of the query. Accordingly, only users that are authorized for an intended purpose can access information in the database. However, this privacy-aware database does not consider privacy restrictions of the jurisdiction that it is located. Further, this database does not protect identifiable information that can be inferred from responses to a query from multiple databases.

A federated database system is a meta-database management system that maps constituent databases into a single federated database. As such, a federated database is a virtual database this is a composite of the constituent databases that it represents. The federated database system is perceived to be one database system by sending a query to each constituent database and then combining the responses to the query received from each constituent database. Further, each constituent database may be an autonomous database with the ability to independently communicate with other databases, execute and

control its operations, or associate (or dissociate) itself with other databases. However, current federated database systems do not consider privacy restrictions of the jurisdiction(s) that it represents and do not protect identifiable information that can be inferred from responses to a query from multiple databases in the same or different jurisdiction. As previously discussed, current privacy-aware databases and federated database systems do not consider privacy restrictions of the jurisdiction(s) that they represent. However, database users typically want to combine responses to a query from databases in the same or different jurisdictions. By doing so, identifiable information contained in or inferred by the responses may not be protected in conformance with the privacy laws of the jurisdiction of each accessed database. In one example, a query related to counting the number of persons that have an income in a specific range and a certain range of education from two different databases requires combining the responses to the query based on the personal identifiable information (e.g., name, social security number, address, or the like), which may violate the privacy restrictions in the jurisdiction of each database. In another example, a query related to a list of persons (e.g., user identifier) in a first database and a log of visited webpages indexed by visitors (e.g., user identifier) may not be combined in violation of the privacy restrictions of the jurisdiction of each database (e.g., a EU citizen whose surfing habits are stored in a US database). In yet another example, a query related to linking like expectancy to food habits may be able to combine a first response from a database with grocery shopping receipts from grocery store chains, a second response from a database with restaurant receipts from credit card companies, and a third response from a database with life duration from government tax offices based on the identifiable information in the responses in violation of the privacy restrictions of the jurisdiction of each database.

US2005108526A1 discusses a method of controlling graduated access to data resources within an organization by assigning security access privileges to organizational roles. When a query is received, an organizational role is associated with a query source. Security access privileges are used to determine available query data results for the organizational role. US2013198857A1 discusses processing of restricted-access data in a distributed data system which provide data sets of restricted-access data to a user. US2012303616A1 discusses anonymizing data from multiple data sources. The data sources include record identifiers identifying entities associated with the data. Data is anonymized at least partly by replacing record identifiers with anonymous identifiers. In other words, there has been work ongoing to improve security for data, however security risks are still prevalent.

Accordingly, there is a need for improved techniques for querying a federated database in conformance with jurisdictional privacy restrictions. In addition, other desirable features and characteristics of the present disclosure will become apparent from the subsequent detailed description and embodiments, taken in conjunction with the accompanying figures and the foregoing technical field and background. The Background section of this document is provided to place embodiments of the present disclosure in technological and operational context, to assist those of skill in the art in understanding their scope and utility. Unless explicitly identified as such, no statement herein is admitted to be prior art merely by its inclusion in the Background section.

### SUMMARY

The following presents a simplified summary of the disclosure in order to provide a basic understanding to those of skill in the art. This summary is not an extensive overview of the disclosure and is not intended to identify key/critical elements of embodiments of the disclosure or to delineate the scope of the disclosure. The sole purpose of this summary is to present some concepts disclosed herein in a simplified form as a prelude to the more detailed description that is presented later.

Systems and methods of querying a federated database in conformance with jurisdictional privacy restrictions are presented herein. According to one aspect, a method performed by a network node having a federated database that represents directly, or indirectly via a sub-federated database, one or more autonomous databases that are located in a same or different jurisdiction comprises obtaining a query that is related to identifiable information stored in at least one autonomous database or that is determinable from a combination of responses to the query received from at least two autonomous or sub-federated databases. Further, the method includes adapting the query for each autonomous or sub-federated database based on one or more privacy restrictions for the jurisdiction of that autonomous or sub-federated database. The method also includes sending, by the network node, to each autonomous or sub-federated database, the adapted query for that database. The method includes receiving, by the network node, from each autonomous or sub-federated database, a response to the corresponding adapted query. In addition, the method includes composing an adapted response to the query based on the response to the corresponding adapted query received from each autonomous or sub-federated database so that the adapted response meets the one or more privacy restrictions for the jurisdiction of each autonomous or sub-federated database.

According to another aspect, the step of composing the adapted response includes combining the responses to the adapted queries from the autonomous or sub-federated databases based on anonymized information received in each response. Further, the anonymized information is the identifiable information that is anonymized by each database based on a randomized salt received from the network node for that query.

According to another aspect, the step of adapting the query includes determining a randomized salt for the query. Also, the adapted query for each autonomous or sub-federated database includes the query and the salt so that each autonomous or sub-federated database is operable to anonymize the identifiable information in each response to that query based on the salt.

According to another aspect, the method includes deleting the salt for the query responsive to said combining so that an ability to determine the identifiable information from the anonymized information only occurs between receiving the anonymized information from each autonomous or sub-federated database and said deleting.

According to another aspect, the anonymized information is associated with a cryptographically-secure hash function and the salt.

According to another aspect, the step of composing the adapted response includes performing a statistical operation on each received response or a combination of the received responses so that the adapted response includes one or more statistical values.

According to another aspect, the step of composing the adapted response includes performing a comparison operation on the received responses or a combination of the received responses so that the adapted response includes one or more comparison values or indications.

According to another aspect, the step of adapting the query includes identifying one or more data fields of the query that correspond to the identifiable information based on the one or more privacy restrictions for the jurisdiction of that database.

According to another aspect, the method includes receiving, by the network node, from each autonomous or sub-federated database, the one or more privacy restrictions for the corresponding jurisdiction.

According to another aspect, the step of obtaining the query includes receiving, by the network node, from a client device, the query.

According to another aspect, the method includes sending, by the network node, to a client device, the adapted response.

According to another aspect, the step of sending the adapted response is responsive to determining that the client device is in a same jurisdiction as the network node.

According to another aspect, the method includes receiving, by the network node, from each autonomous or sub-federated database, an authorization key from that database that authorizes the federated database to query that database in conformance with the one or more privacy restrictions for the jurisdiction of that database.

According to another aspect, the step of sending the adapted query for that database includes sending the adapted query and the authorization key for that database.

According to another aspect, the federated database represents a first sub-federated database having one or more first autonomous databases that are located in a first jurisdiction with one or more first privacy restrictions.

According to another aspect, the federated database represents a second sub-federated database having one or more second autonomous databases that are located in a second jurisdiction with one or more second privacy restrictions.

According to another aspect, the federated database represents a single autonomous database that is located in a certain jurisdiction with one or more privacy restrictions.

According to another aspect, the federated database represents a plurality of autonomous databases that are located in a same jurisdiction with one or more privacy restrictions.

According to another aspect, the federated database represents a plurality of autonomous databases that are located in different jurisdictions with one or more different privacy restrictions.

According to one aspect, a network node has a federated database that represents directly, or indirectly via a sub-federated database, one or more autonomous databases that are located in a same or different jurisdiction. Further, the network node is configured to obtain a query that is related to identifiable information stored in at least one autonomous database or that is determinable from a combination of responses to the query received from at least two autonomous or sub-federated databases. The network node is also configured to adapt the query for each autonomous or sub-federated database based on one or more privacy restrictions for the jurisdiction of that autonomous or sub-federated database. The network node is configured to send, to each autonomous or sub-federated database, the adapted query for that database. In addition, the network node is configured to receive, from each autonomous or sub-federated database, a response to the corresponding adapted query. Finally, the network node is configured to compose an adapted response to the query based on the response to the corresponding adapted query received from each autonomous or sub-federated database so that the adapted response meets the one or more privacy restrictions for the jurisdiction of each autonomous or sub-federated database.

According to one aspect, a network node has a federated database that represents directly, or indirectly via a sub-federated database, one or more autonomous databases that are located in a same or different jurisdiction. Further, the network node comprises at least one processor and a memory. The memory comprises instructions executable by the at least one processor whereby the network node is configured to obtain a query that is related to identifiable information stored in at least one autonomous database or that is determinable from a combination of responses to the query received from at least two autonomous or sub-federated databases. The memory also comprises instructions whereby the network node is configured to adapt the query for each autonomous or sub-federated database based on one or more privacy restrictions for the jurisdiction of that autonomous or sub-federated database. The memory comprises instructions whereby the network node is configured to send, to each autonomous or sub-federated database, the adapted query for that database. In addition, the memory also comprises instructions whereby the network node is configured to receive, from each autonomous or sub-federated database, a response to the corresponding adapted query. The memory also comprises instructions whereby the network node is configured to compose an adapted response to the query based on the response to the corresponding adapted query received from each autonomous or sub-federated database so that the adapted response meets the one or more privacy restrictions for the jurisdiction of each autonomous or sub-federated database.

According to one aspect, a network node has a federated database that represents directly, or indirectly via a sub-federated database, one or more autonomous databases that are located in a same or different jurisdiction. The network node comprises an obtaining unit for obtaining a query that is related to identifiable information stored in at least one autonomous database or that is determinable from a combination of responses to the query received from at least two autonomous or sub-federated databases. Further, the network node comprises an adapting unit for adapting the query for each autonomous or sub-federated database based on one or more privacy restrictions for the jurisdiction of that autonomous or sub-federated database. The network node also comprises a sending unit for sending, to each autonomous or sub-federated database, the adapted query for that database. In addition, the network node comprises a receiving unit for receiving, from each autonomous or sub-federated database, a response to the corresponding adapted query. The network node also comprises a composing unit for composing an adapted response to the query based on the response to the corresponding adapted query received from each autonomous or sub-federated database so that the adapted response meets the one or more privacy restrictions for the jurisdiction of each autonomous or sub-federated database.

According to one aspect, a computer program, comprising instructions which, when executed on at least one processor of a network node having a federated database that represents directly, or indirectly via a sub-federated database, one or more autonomous databases that are located in a same or different jurisdiction, cause the at least one processor to carry out any of the method described herein. Further, a carrier may contain the computer program, with the carrier being one of an electronic signal, optical signal, radio signal, or computer readable storage medium.

According to one aspect, a method performed by a network node having an autonomous database that is represented by a federated or sub-federated database, with the autonomous database being located in a certain jurisdiction, comprises receiving, by the network node, from the federated or sub-federated database, a query and a randomized salt for the query. Further, the query is related to identifiable information stored in the autonomous database or that is determinable from a combination of responses to the query that are received by the federated or sub-federated database from the autonomous database and one or more other autonomous or sub-federated databases that are represented by the federated or sub-federated database. The method also includes obtaining a response to the query from the autonomous database, with the response having the identifiable information. In addition, the method includes anonymizing the identifiable information of the response based on the received salt. Finally, the method includes sending, by the network node, to the federated or sub-federated database, the response having the anonymized information so that the response meets one or more privacy restrictions for the jurisdiction of the autonomous database.

According to another aspect, the step of anonymizing the identifiable information of the response is based on a cryptographically-secure hash function and the salt.

According to another aspect, the method includes sending, by the network node, to the federated or sub-federated database, the one or more privacy restrictions for the jurisdiction.

According to another aspect, the method includes obtaining an authorization key that authorizes the federated or sub-federated database to query the autonomous database in conformance with the one or more privacy restrictions for the jurisdiction. Further, the method includes sending, by the network node, to the federated or sub-federated database, the authorization key.

According to another aspect, the method includes determining whether the query is authorized based on an authorization key received with the query that authorizes the federated or sub-federated database to query the autonomous database in conformance with the one or more privacy restrictions for the jurisdiction. Also, the steps of obtaining the response to the query, anonymizing the response, and sending the response are all responsive to determining that the query is authorized.

According to one aspect, a network node has an autonomous database that is represented by a federated or sub-federated database, with the autonomous database being located in a certain jurisdiction. The network node is configured to receive, from the federated or sub-federated database, a query and a randomized salt for the query, the query being related to identifiable information stored in the autonomous database or that is determinable from a combination of responses to the query that are received by the federated or sub-federated database from the autonomous database and one or more other autonomous or sub-federated databases that are represented by the federated or sub-federated database. Further, the network node is configured to obtain a response to the query from the autonomous database, with the response having the identifiable information. Also, the network node is configured to anonymize the identifiable information of the response based on the received salt. In addition, the network node is configured to send, to the federated or sub-federated database, the response having the anonymized information so that the response meets one or more privacy restrictions for the jurisdiction of the autonomous database.

According to one aspect, a network node has an autonomous database that is represented by a federated or sub-federated database, with the autonomous database being located in a certain jurisdiction. The network node comprises at least one processor and a memory. Also, the memory comprises instructions executable by the at least one processor whereby the network node is configured to receive, from the federated or sub-federated database, a query and a randomized salt for the query. The query is related to identifiable information stored in the autonomous database or that is determinable from a combination of responses to the query that are received by the federated or sub-federated database from the autonomous database and one or more other autonomous or sub-federated databases that are represented by the federated or sub-federated database. Further, the memory comprises instructions whereby the network node is configured to obtain a response to the query from the autonomous database, the response having the identifiable information. The memory also comprises instructions whereby the network node is configured to anonymize the identifiable information of the response based on the received salt. In addition, the memory comprises instructions whereby the network node is configured to send, to the federated or sub-federated database, the response having the anonymized information so that the response meets one or more privacy restrictions for the jurisdiction of the autonomous database.

According to one aspect, a network node has an autonomous database that is represented by a federated or sub-federated database, with the autonomous database being located in a certain jurisdiction. The network node comprises a receiving module for receiving, by the network node, from the federated or sub-federated database, a query and a randomized salt for the query. The query being related to identifiable information stored in the autonomous database or that is determinable from a combination of responses to the query that are received by the federated or sub-federated database from the autonomous database and one or more other autonomous or sub-federated databases that are represented by the federated or sub-federated database. Further, the network node comprises an obtaining module for obtaining a response to the query from the autonomous database, the response having the identifiable information. Also, the network node comprises an anonymizing module for anonymizing the identifiable information of the response based on the received salt. In addition, the network node comprises a sending module for sending, by the network node, to the federated or sub-federated database, the response having the anonymized information so that the response meets one or more privacy restrictions for the jurisdiction of the autonomous database.

According to one aspect, a computer program, comprising instructions which, when executed on at least one processor of a network node having an autonomous database that is represented by a federated or sub-federated database, with the autonomous database being located in a certain jurisdiction, cause the at least one processor to carry out any of the methods described herein. Further, a carrier may contain the computer program, with the carrier being one of an electronic signal, optical signal, radio signal, or computer readable storage medium.

### BRIEF DESCRIPTION OF THE DRAWINGS

The present disclosure will now be described more fully hereinafter with reference to the accompanying drawings, in which embodiments of the disclosure are shown. However, this disclosure should not be construed as limited to the embodiments set forth herein. Rather, these embodiments are provided so that this disclosure will be thorough and complete, and will fully convey the scope of the disclosure to those skilled in the art. Like numbers refer to like elements throughout.
**FIG. 1** illustrates a flow diagram of one embodiment of a system for querying a federated database in accordance with various aspects as described herein.
**FIG. 2** illustrates a flow diagram of another embodiment of a system for querying a federated database in accordance with various aspects as described herein.
**FIG. 3** illustrates one embodiment of a network node having a federated database in accordance with various aspects as described herein.
**FIG. 4** illustrates another embodiment of a network node having a federated database in accordance with various aspects as described herein.
**FIGs. 5A-B** illustrates one embodiment of a method performed by a network node having a federated database representing one or more autonomous or sub-federated databases that are located in a same or different jurisdiction in accordance with various aspects as described herein.
**FIG. 6** illustrates one embodiment of a network node having an autonomous database in accordance with various aspects as described herein.
**FIG. 7** illustrates another embodiment of a network node having an autonomous database in accordance with various aspects as described herein.
**FIGs. 8A-B** illustrate embodiments of a method performed by a network node having an autonomous database, in a certain jurisdiction, that is represented by a federated or sub-federated database in accordance with various aspects as described herein.
**FIG. 9** illustrates another embodiment of a system for querying a federated database in accordance with various aspects as described herein.
**FIG. 10** illustrates another embodiment of a system for querying a federated database in accordance with various aspects as described herein.
**FIG. 11** illustrates another embodiment of a system for querying a federated database in accordance with various aspects as described herein.
**FIG. 12** illustrates another embodiment of a system for querying a federated database in accordance with various aspects as described herein.
**FIG. 13** illustrates one embodiment of a network node in accordance with various aspects as described herein.

### DETAILED DESCRIPTION

For simplicity and illustrative purposes, the present disclosure is described by referring mainly to an exemplary embodiment thereof. In the following description, numerous specific details are set forth in order to provide a thorough understanding of the present disclosure. However, it will be readily apparent to one of ordinary skill in the art that the present disclosure may be practiced without limitation to these specific details. In this description, well known methods and structures have not been described in detail so as not to unnecessarily obscure the present disclosure.

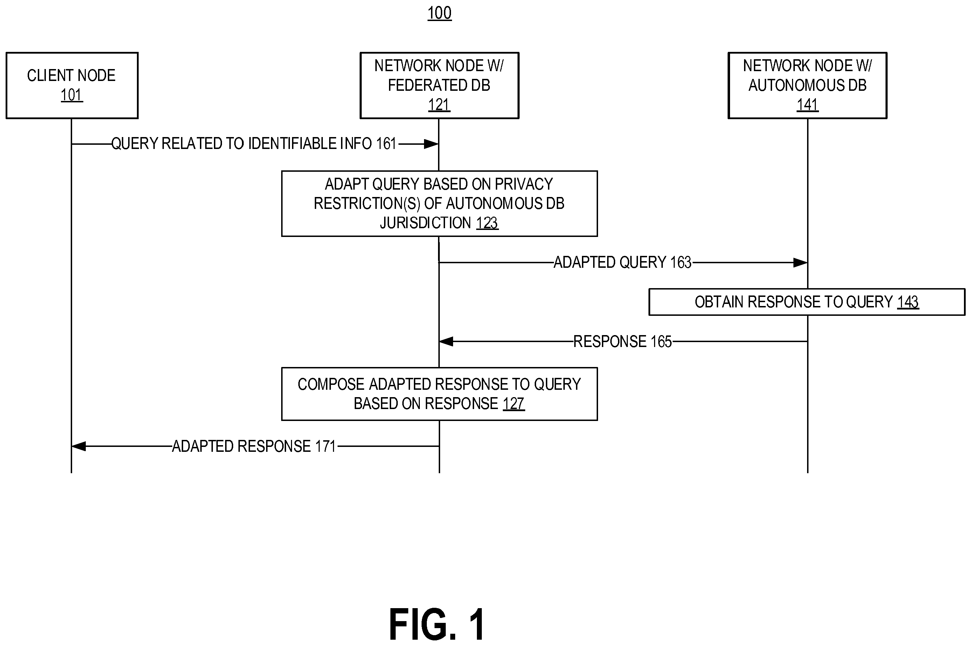

This disclosure includes describing systems and methods of querying a federated database in conformance with jurisdictional privacy restrictions. Further, this disclosure describes novel techniques of composing or combining responses to a query received from databases located in the same or different jurisdictions while honoring the integrity of personal data stored in these databases. For example, **FIG. 1** is a flow diagram of one embodiment of a system **100** for querying a federated database in accordance with various aspects as described herein. In **FIG. 1****,** the system **100** includes a client node **101** (e.g., smartphone), a network node **121** (e.g., computer server) having a federated database, and a network node **141** (e.g., computer server) having an autonomous database (e.g., personal records at the Internal Revenue Service). The federated database represents directly, or indirectly via a sub-federated database, one or more autonomous database that is located in a certain jurisdiction (e.g., United States).

In **FIG. 1****,** in one embodiment, the client device **101** sends a query (e.g., identifying the number of persons that have a certain income range) that is related to identifiable information stored in the autonomous database or that is determinable from a combination of responses to the query **161** received from the autonomous database and another autonomous database that is located in the same jurisdiction, as represented by reference **161.** The federated network node **221** receives the query and adapts the query for the autonomous database based on one or more privacy restrictions for the jurisdiction of that autonomous database, as represented by block **123.** The federated network node **121** then sends the adapted query to the autonomous network node **141,** as represented by reference **163.** The autonomous network node **141** receives the adapted query and obtains a response **167** to the adapted query from the autonomous database, as represented by block **143.** The autonomous network node **141** sends the response to the federated network node **221,** as represented by reference **165.** The federated network node **121** composes an adapted response to the query based on the received response, as represented by block **127.** In addition, the federated network node **121** sends the adapted response to the client node **101,** as represented by reference **171.**

The client node **101** may be user equipment, a mobile station (MS), a terminal, a cellular phone, a cellular handset, a personal digital assistant (PDA), a smartphone, a wireless phone, an organizer, a handheld computer, a desktop computer, a laptop computer, a tablet computer, a set-top box, a television, an appliance, a game device, a medical device, a display device, a metering device, or the like. Each network node **121, 141** may be a computer-implemented node that is a communication redistribution point or a communication endpoint in a network such as a computer server, a base station, a core network node, a handheld computer, a desktop computer, a laptop computer, a tablet computer, a set-top box, a television, an appliance, a medical device, or some other like terminology.

The identifiable information may be any information that is associated with a particular person, place, or thing. Further, the identifiable information may include personal information associated with a person, business, organization, government entity, or the like. The identifiable information may also include secret or confidential information. Confidential information includes information that is shared with the expectation that it will not be disclosed to unauthorized third parties. A jurisdiction may represent the authority granted to a particular body to administer certain privacy restrictions within a defined field of responsibility (e.g., U.S. federal law, Michigan tax law, Internal Review Service, Environmental Protection Agency, and the like). Further, a jurisdiction may be associated with a particular territory such as a federation (e.g., EU), country, state, province, city, county, municipality, township, and the like). The privacy restrictions are associated with the laws, rules, or regulations of a jurisdiction. For instance, the privacy restrictions may restrict or limit the ability to share personal information such as a name, address, phone number, financial record, medical record, location, personal attribute, or the like.

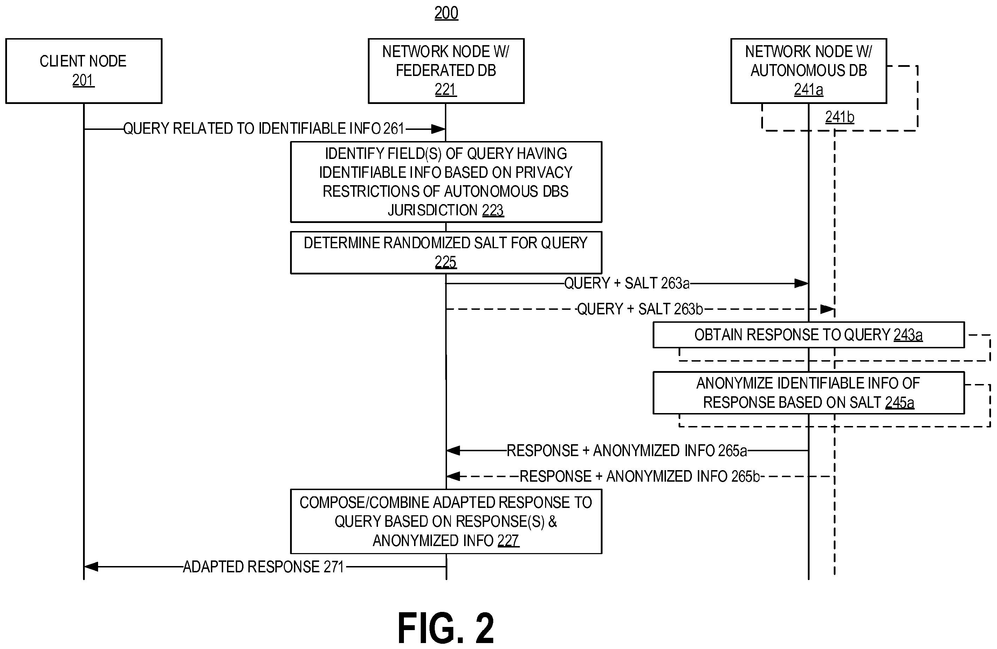

**FIG. 2** is a flow diagram of one embodiment of a system **200** for querying a federated database in accordance with various aspects as described herein. In **FIG. 2****,** the system **200** includes a client node **201,** a network node **221** having a federated database, a network node **241a** having a first autonomous database (e.g., personal records at the Internal Revenue Service), and a network node **241b** having a second autonomous database (e.g., personal records at U.S. Census Bureau). The federated database represents directly, or indirectly via a sub-federated database, the first and second databases that are located in a same or different jurisdiction (e.g., United States).

In **FIG. 2****,** in one embodiment, the client device **201** sends a query that is related to identifiable information stored in the first or second autonomous database or that is determinable from a combination of responses to the query received from the first and second databases, as represented by reference **261.** The federated network node **221** receives the query and identifies one or more data fields of the query that correspond to the identifiable information based on one or more privacy restrictions for the jurisdiction of the corresponding autonomous database, as represented by block **223.** In response to identifying that one or more fields of the query corresponds to identifiable information, the federated network node **221** determines a randomized salt for the query, as represented by block **225.** The federated network node **221** then sends the query and the salt to the autonomous network node **241a,** as represented by reference **263a.**

In this embodiment, the autonomous network node **241a** receives the query and salt and obtains a response to the query from the first autonomous database, as represented by block **243a.** The autonomous network node **241a** then anonymizes the identifiable information of the response based on the salt, as represented by block **245a.** In one example, the identifiable information and the salt are processed with a cryptographic hash function to obtain the anonymized information. The autonomous network node **241a** sends the response having the anonymized information to the federated network node **221,** as represented by reference **265a.** The federated network node **221** composes an adapted response to the query based on the response and its anonymized information, as represented by block **227.** In addition, the federated network node **221** sends the adapted response to the client node **201,** as represented by reference **271.**

In another embodiment, the federated network node **221** sends the same query and salt to each autonomous network node **241a, 241b,** as represented by references **263a, 263b.** The autonomous network nodes **241a, 241b** may be in the same jurisdiction or in different jurisdictions. Each autonomous network node **241a, 241b** receives the query and salt and obtains a corresponding response to the query via its autonomous database. Further, each autonomous network node **241a, 241b** anonymizes the identifiable information of the corresponding response based on the salt. Each autonomous network node **241a, 241b** sends the corresponding response having the anonymized information to the federated network node **221,** as represented by respective reference **265a, 265b.** The federated network node **221** then combines the responses to the queries from the first and second autonomous databases based on the anonymized information received in each response.

Note that the apparatuses described above may perform the methods herein and any other processing by implementing any functional means, modules, units, or circuitry. In one embodiment, for example, the apparatuses comprise respective circuits or circuitry configured to perform the steps shown in the method figures. The circuits or circuitry in this regard may comprise circuits dedicated to performing certain functional processing and/or one or more microprocessors in conjunction with memory. For instance, the circuitry may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory may include program instructions for executing one or more telecommunications and/or data communications protocols as well as instructions for carrying out one or more of the techniques described herein, in several embodiments. In embodiments that employ memory, the memory stores program code that, when executed by the one or more processors, carries out the techniques described herein.

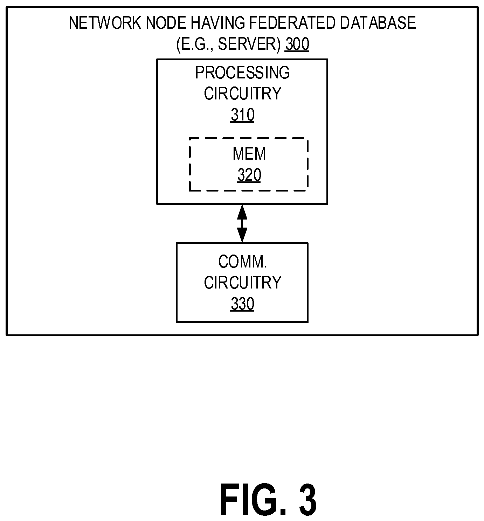

**FIG. 3** illustrates one embodiment of a network node **300** having a federated database in accordance with various aspects as described herein. As shown, the network node **300** includes processing circuitry **310** and communication circuitry **330.** The communication circuitry **330** is configured to transmit and/or receive information to and/or from one or more other nodes, e.g., via any communication technology. The processing circuitry **310** is configured to perform processing described above, such as by executing instructions stored in memory **320.** The processing circuitry **310** in this regard may implement certain functional means, units, or modules.

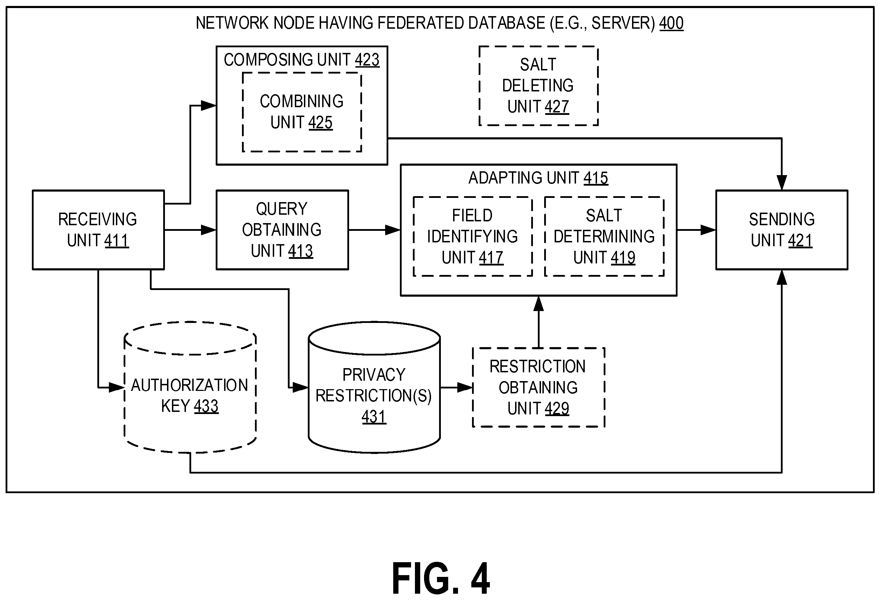

**FIG. 4** illustrates another embodiment of a network node **400** having a federated database in accordance with various aspects as described herein. As shown, the network node **400** implements various functional means, units, or modules (e.g., via the processing circuitry **310** in **FIG. 3****,** via software code), or circuits. In one embodiment, these functional means, units, modules, or circuits (e.g., for implementing the method(s) herein) may include for instance: an obtaining unit **413** for obtaining a query that is related to identifiable information stored in at least one autonomous database or that is determinable from a combination of responses to the query received from at least two autonomous or sub-federated databases; an adapting unit **415** for adapting the query for each autonomous or sub-federated database based on one or more privacy restrictions **431** for the jurisdiction of that autonomous or sub-federated database; a sending unit **421** for sending, to each autonomous or sub-federated database, the adapted query for that database; a receiving unit **411** for receiving, from each autonomous or sub-federated database, a response to the corresponding adapted query; and a composing unit **423** for composing an adapted response to the query based on the response to the corresponding adapted query received from each autonomous or sub-federated database so that the adapted response meets the one or more privacy restrictions **431** for the jurisdiction of each autonomous or sub-federated database.

In another embodiment, these functional means, units, modules, or circuits may include for instance: the obtaining unit **413** for obtaining a query that is related to identifiable information stored in at least one autonomous database or that is determinable from a combination of responses to the query received from at least two autonomous or sub-federated databases; a salt determining unit **419** for determining a randomized salt for the query; a sending unit **421** for sending, to each autonomous or sub-federated database, the adapted query for that database; a receiving unit **411** for receiving, from each autonomous or sub-federated database, a response to the corresponding adapted query; and a combining unit **425** for combining the responses to the adapted query from the autonomous or sub-federated databases based on the anonymized information received in each response.

In another embodiment, these functional means, units, modules, or circuits may include, for instance, an identifying unit **417** for identifying one or more data fields of the query that correspond to the identifiable information based on one or more privacy restrictions **431** for the jurisdiction of that database.

In another embodiment, these functional means, units, modules, or circuits may include, for instance, the receiving unit **411** for receiving, from each autonomous or sub-federated database, an authorization key **433** from that database that authorizes the federated database to query that database in conformance with one or more privacy restrictions **431** for the jurisdiction of that database.

In another embodiment, these functional means, units, modules, or circuits may include, for instance, the receiving unit **411** for receiving, from each autonomous or sub-federated database, one or more privacy restrictions **431** for a corresponding jurisdiction of that database.

In another embodiment, these functional means, units, modules, or circuits may include, for instance, the sending unit **421** for sending, to a client device, the adapted response.

In another embodiment, these functional means, units, modules, or circuits may include, for instance, a deleting unit **427** for deleting the salt for the query responsive to combining the responses so that an ability to determine the identifiable information from the anonymized information only occurs between receiving the anonymized information from each autonomous or sub-federated database and deleting the salt.

In another embodiment, these functional means, units, modules, or circuits may include, for instance, a restriction obtaining unit **431** for obtaining one or more privacy restrictions for a jurisdiction.

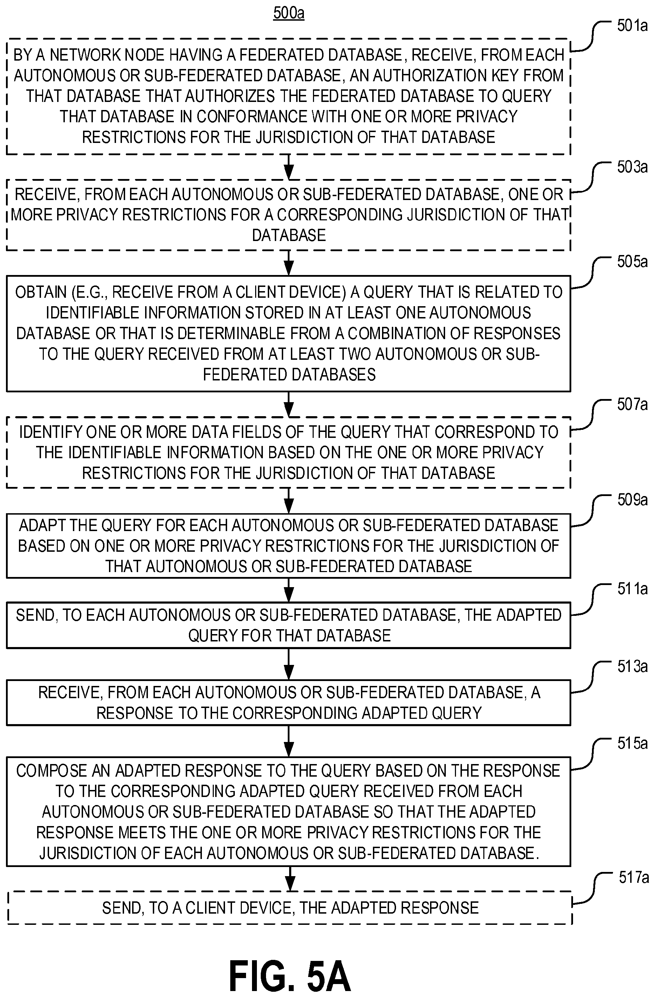

**FIG. 5A** illustrates one embodiment of a method **500a** performed by a network node having a federated database representing one or more autonomous or sub-federated databases that are located in a same or different jurisdiction in accordance with various aspects as described herein. In **FIG. 5A****,** the method **500a** may start, for instance, at block **501a,** where it may include receiving, from each autonomous or sub-federated database, an authorization key from that database that authorizes the federated database to query that database in conformance with one or more privacy restrictions for the jurisdiction of that database. Further, the method **500a** may include receiving, from each autonomous or sub-federated database, one or more privacy restrictions for a corresponding jurisdiction of that database, as referenced by block **503a.** At block **505a,** the method **500a** includes obtaining (e.g., receiving from a client device) a query that is related to identifiable information stored in at least one autonomous database or that is determinable from a combination of responses to the query received from at least two autonomous or sub-federated databases. Also, the method **500a** may include identifying one or more data fields of the query that correspond to the identifiable information based on the one or more privacy restrictions for the jurisdiction of that database, as referenced by block **507a.**

In **FIG. 5A****,** at block **509a,** the method **500a** includes adapting the query for each autonomous or sub-federated database based on one or more privacy restrictions for the jurisdiction of that autonomous or sub-federated database, which may be responsive to identifying the identifiable information. At block **511a**, the method **500a** includes sending, to each autonomous or sub-federated database, the adapted query for that database. At block **513a,** the method **500a** includes receiving, from each autonomous or sub-federated database, a response to the corresponding adapted query. At block **515a,** the method **500a** includes composing an adapted response to the query based on the response to the corresponding adapted query received from each autonomous or sub-federated database so that the adapted response meets the one or more privacy restrictions for the jurisdiction of each autonomous or sub-federated database. In addition, the method **500a** may include sending, to a client device, the adapted response, as represented by block **517a.**

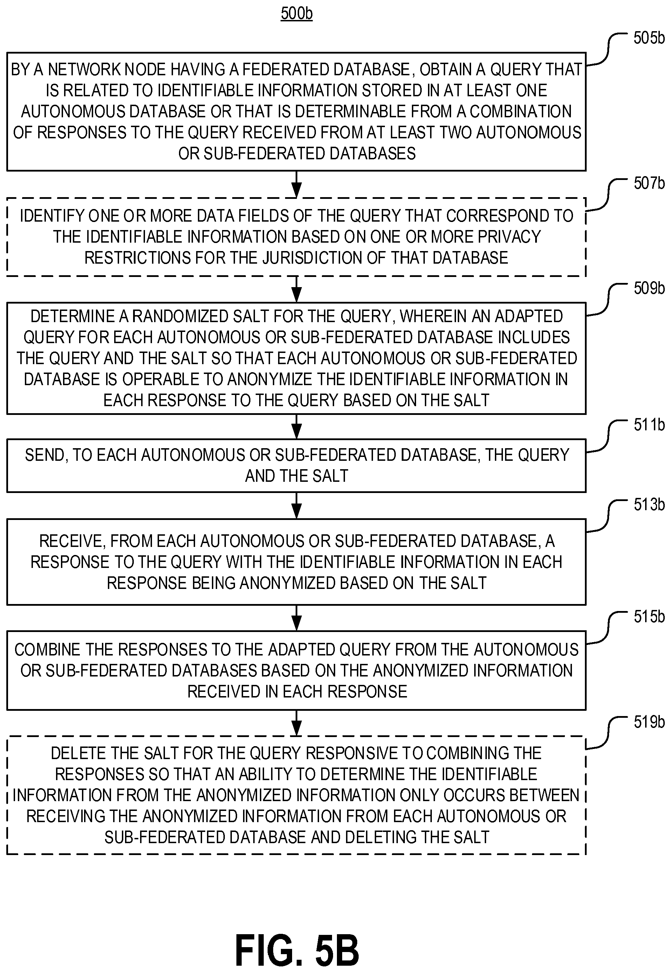

**FIG. 5B** illustrates one embodiment of a method **500b** performed by a network node having a federated database representing one or more autonomous or sub-federated databases that are located in a same or different jurisdiction in accordance with various aspects as described herein. In **FIG. 5B****,** the method **500b** may start, for instance, at block **505b,** where it may include obtaining a query that is related to identifiable information stored in at least one autonomous database or that is determinable from a combination of responses to the query received from at least two autonomous or sub-federated databases. Further, the method **500b** may include identifying one or more data fields of the query that correspond to the identifiable information based on one or more privacy restrictions for the jurisdiction of that database, as represented by block **507b.** An adapted query for each autonomous or sub-federated database includes the query and a randomized salt so that each autonomous or sub-federated database is operable to anonymize the identifiable information in each response to the query based on the salt. Accordingly, at block **509b,** the method **500b** includes determining the salt for the query. At block **511b,** the method **500b** includes sending, to each autonomous or sub-federated database, the query and the salt. At block **513b,** the method **500b** includes receiving, from each autonomous or sub-federated database, a response to the query with the identifiable information in each response being anonymized based on the salt. At block **515b,** the method **500b** includes combining the responses to the adapted query from the autonomous or sub-federated databases based on the anonymized information received in each response. In addition, the method may include deleting the salt for the query responsive to combining the responses so that an ability to determine the identifiable information from the anonymized information only occurs between receiving the anonymized information from each autonomous or sub-federated database and deleting the salt, as represented by block **519b.**

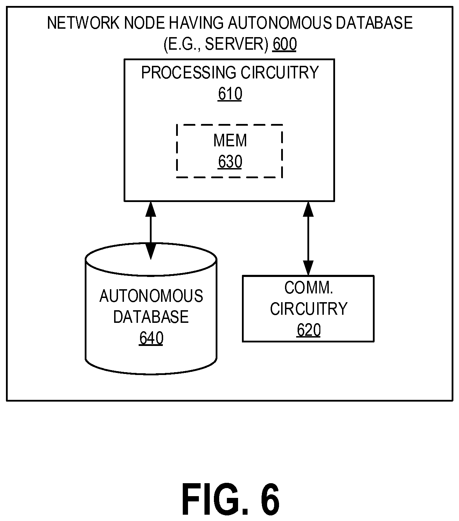

**FIG. 6** illustrates one embodiment of a network node **600** having an autonomous database **640** in accordance with various aspects as described herein. As shown, the network node **600** includes processing circuitry **610,** communication circuitry **620,** and the autonomous database **640.** The communication circuitry **620** is configured to transmit and/or receive information to and/or from one or more other nodes, e.g., via any communication technology. The processing circuitry **610** is configured to perform processing such as by executing instructions stored in memory **630.** Further, the processing circuitry **610** is configured to perform processing associated with the autonomous database **640.** The processing circuitry **610** in this regard may implement certain functional means, units, or modules.

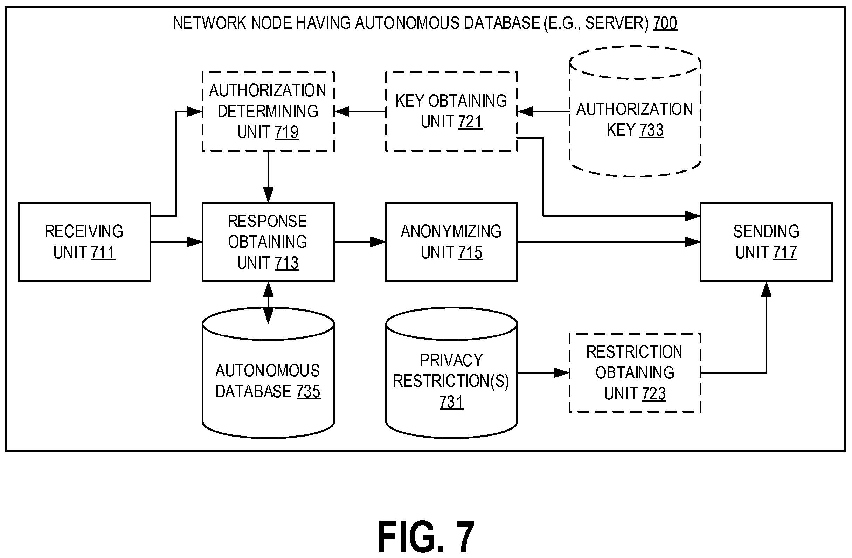

**FIG. 7** illustrates another embodiment of a network node **700** having an autonomous database **735** in accordance with various aspects as described herein. As shown, the network node **700** implements various functional means, units, or modules (e.g., via the processing circuitry **610** in **FIG. 6** and/or via software code), or circuits. In one embodiment, these functional means, units, modules, or circuits (e.g., for implementing the method(s) herein) may include for instance: a receiving unit **711** for receiving, from the federated or sub-federated database, a query and a randomized salt for the query; a response obtaining unit **713** for obtaining a response to the query from the autonomous database **735** with the response having the identifiable information; an anonymizing unit **715** for anonymizing the identifiable information of the response based on the received salt; and a sending unit **717** for sending, to the federated or sub-federated database, the response having the anonymized information so that the response meets one or more privacy restrictions **731** for the jurisdiction of the autonomous database.

In another embodiment, these functional means, units, modules, or circuits may include for instance: a key obtaining unit **721** for obtaining an authorization key **733** that authorizes the federated or sub-federated database to query the autonomous database **735** in conformance with the one or more privacy restrictions for the jurisdiction; the sending unit **717** for sending, to the federated or sub-federated database, the authorization key **733;** the receiving unit **711** for receiving, from the federated or sub-federated database, a query, a randomized salt for the query and a key; an authorization determining unit **719** for determining whether the federated or sub-federated database is authorized to query the autonomous database **735** based on the received key and the authorization key **733.**

In another embodiment, these functional means, units, modules, or circuits may include for instance: a restriction obtaining unit **723** for obtaining one or more privacy restrictions **731** for the jurisdiction of the autonomous database **735;** and the sending unit **717** for sending, to the federated or sub-federated database, the one or more privacy restrictions **731** for the jurisdiction.

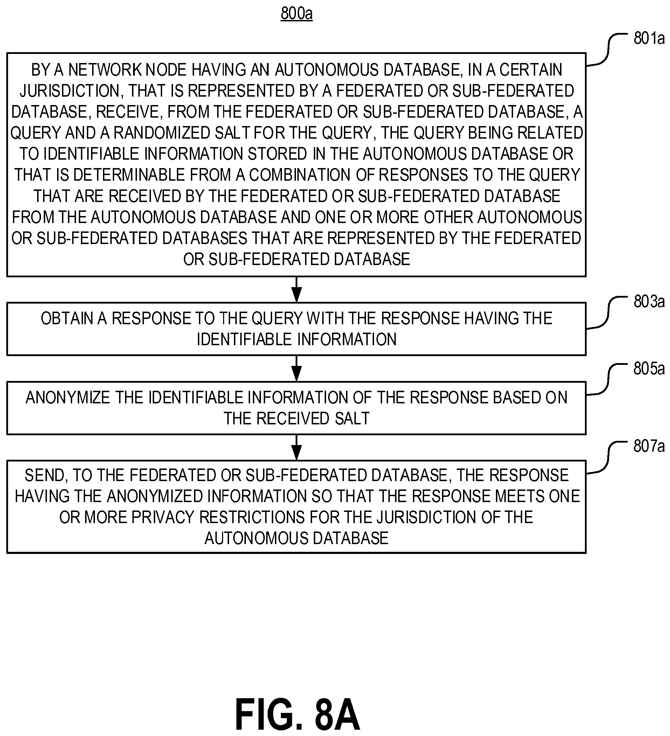

**FIG. 8A** illustrates one embodiment of a method **800a** performed by a network node having an autonomous database, in a certain jurisdiction, that is represented by a federated or sub-federated database in accordance with various aspects as described herein. In **FIG. 8A****,** the method **800a** may start, for instance, at block **801a** where it includes receiving, from the federated or sub-federated database, a query and a randomized salt for the query. Further, the query is related to identifiable information stored in the autonomous database or that is determinable from a combination of responses to the query that are received by the federated or sub-federated database from the autonomous database and one or more other autonomous or sub-federated databases that are represented by the federated or sub-federated database. Further, the method **800a** includes obtaining a response to the query from the autonomous database with the response having the identifiable information, as represented by block **803a.** Also, the method **800a** includes anonymizing the identifiable information of the response based on the received salt, as represented by block **805a.** In addition, the method **800a** includes sending, to the federated or sub-federated database, the response having the anonymized information so that the response meets one or more privacy restrictions for the jurisdiction of the autonomous database, as represented by block **807a.**

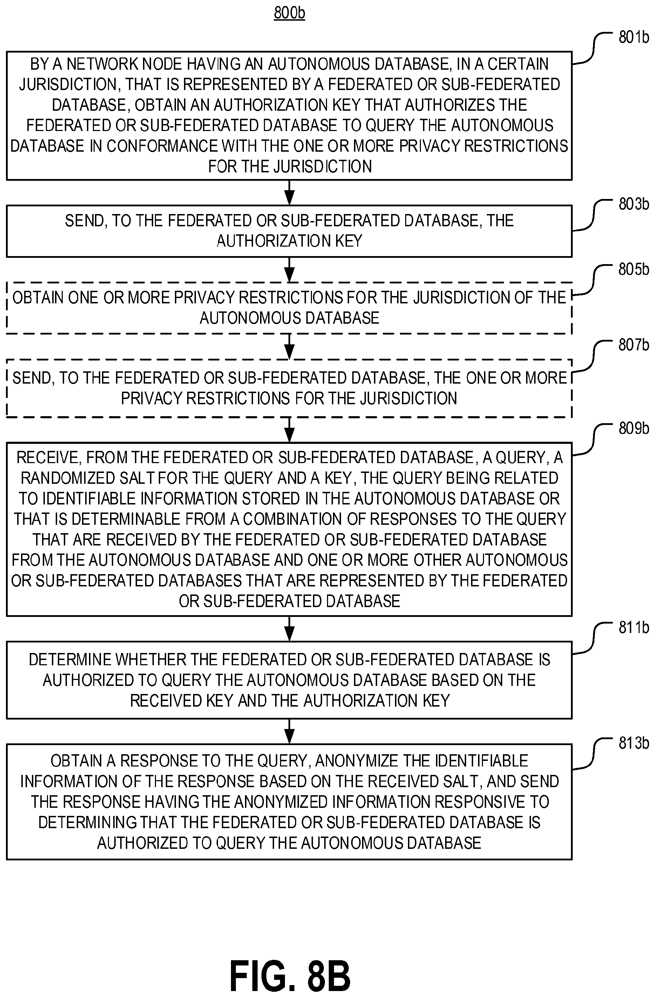

**FIG. 8B** illustrates one embodiment of a method **800b** performed by a network node having an autonomous database, in a certain jurisdiction, that is represented by a federated or sub-federated database in accordance with various aspects as described herein. In **FIG. 8B****,** the method **800b** may start, for instance, at block **801b** where it includes obtaining an authorization key that authorizes the federated or sub-federated database to query the autonomous database in conformance with the one or more privacy restrictions for the jurisdiction. Further, the method **800b** includes sending, to the federated or sub-federated database, the authorization key, as represented by block **803b.** At block **805b,** the method **800b** may include obtaining one or more privacy restrictions for the jurisdiction of the autonomous database. Also, the method **800b** may include sending, to the federated or sub-federated database, the one or more privacy restrictions for the jurisdiction, as represented by block **807b.**

In **FIG. 8b****,** at block **809b,** the method **800b** includes receiving, from the federated or sub-federated database, a query, a randomized salt for the query and a key. The query is related to identifiable information stored in the autonomous database or that is determinable from a combination of responses to the query that are received by the federated or sub-federated database from the autonomous database and one or more other autonomous or sub-federated databases that are represented by the federated or sub-federated database. In addition, the method **800b** includes determining whether the federated or sub-federated database is authorized to query the autonomous database based on the received key and the authorization key, as represented by block **811b.** In response to determining that the federated or sub-federated database is authorized to query the autonomous database, the method 800b includes obtaining a response to the query, anonymizing the identifiable information of the response based on the received salt, and sending the response having the anonymized information to the federated or sub-federated database, as represented by block **813b.**

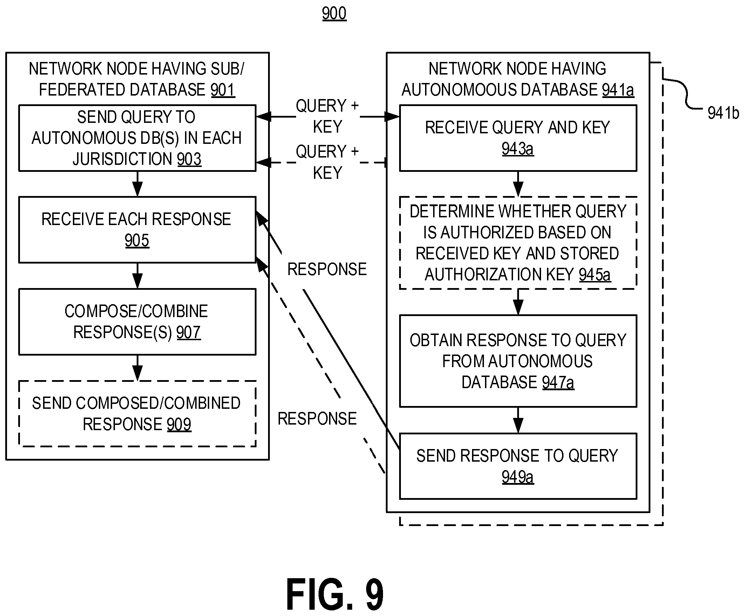

**FIG. 9** illustrates another embodiment of a system **900** for querying a federated database in accordance with various aspects as described herein. In **FIG. 9****,** the system **900** includes a network node **901** having a federated database and a network node **941a** having an autonomous database that is located in a certain jurisdiction. The federated network node **901** sends a query and an optional key to the autonomous network node **941a,** as represented by block **903.** Further, the key is used to authorize the federated or sub-federated database to query the autonomous database in conformance with privacy restrictions for the jurisdiction of that autonomous database.

In **FIG. 9****,** the autonomous network node **941a** receives the query and the optional key , as represented by block **943a.** The autonomous network node **941a** may determine whether the query is authorized based on the received key and an authorization key stored in the autonomous network node **941a**, as represented by block **945a.** The autonomous network node **941a** obtains a response to the query from its autonomous database, as represented by block **947a.** Further, the autonomous network node **941a** sends the response to the query to the federated network node **901,** as represented by block **949a.** The federated network node **901** receives the response, composes an adapted response to the query based on the received response, and sends the adapted response such as to a client device, as represented by respective blocks **905, 909.**

In another embodiment, the federated network node **901** sends the query and optional key to the autonomous network nodes **941a, 941b.** The autonomous network nodes **941a, 941b** may be located in the same jurisdiction or different jurisdictions. Each autonomous network node **941a, 941b** receives the query and optional key and may determine whether the query is authorized based on the received key and an authorization key stored in that autonomous network node **941a, 941b.** Each autonomous network node **941a, 941b** obtains a response to the query from its autonomous database and sends the response to the federated network node **901.** The federated network node **901** receives each response and combines the responses to the query, as represented by respective blocks **905, 909.** The federated network node **901** may then send the combined response such as to a client device, as represented by block **909.**

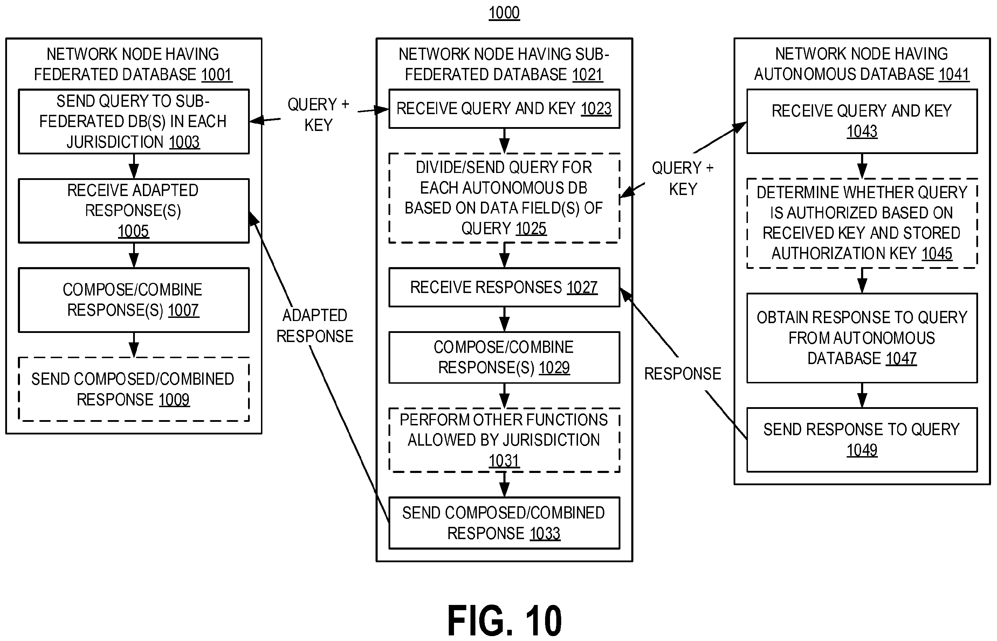

**FIG. 10** illustrates another embodiment of a system **1000** for querying a federated database in accordance with various aspects as described herein. In **FIG. 10****,** the system **1000** includes a network node **1001** having a federated database, a network node **1021** having a sub-federated database that is associated with a certain jurisdiction, and a network node **1041** having an autonomous database that is associated with that certain jurisdiction. The federated network node **1001** sends a query and an optional key to the sub-federated network node **1021,** as represented by block **1003.**

In **FIG. 10****,** the sub-federated network node **1021** receives the query and optional key **1061,** as represented by block **1023.** The sub-federated network node **1021** may determine to divide or adapt the query for each autonomous database based on the data fields of the query and the privacy restriction(s) of that database to obtain an adapted query for that database, as represented by block **1025.** The sub-federated network node **1021** sends the query, or the adapted query, and the optional key to the autonomous network node **1041,** as represented by block **1025.** The autonomous network node **1041** receives the query, or the adapted query, and the optional key, as represented by block **1043.** Further, the autonomous network node **1041** may determine whether the query, or the adapted query, is authorized based on the received key and an authorization key stored in the network node **1041,** as represented by block **1045.** The autonomous network node **1041** then obtains a response to the query, or the adapted query, from its autonomous database, as represented by block **1047.** The autonomous network node **1041** sends the response to the sub-federated network node **1021,** as represented by block **1049.**

Furthermore, the sub-federated network node **1021** receives the response and composes a response based on the received response (or combines received responses if from more than one network node having an autonomous database), as represented by block **1029.** The sub-federated network node **1021** may perform other functions that are allowed by the jurisdiction such as updating another database, applying a relational database model (e.g., ML model), sending an indication (e.g., text message, e-mail), or the like, as represented by block **1031.** The sub-federated network node **1021** sends the response to the federated network node **1001,** as represented by block **1033.** The federated network node **1001** receives the response **1063** and then composes a response based on the received response **1063** (or combines received responses if from more than one network node having an autonomous database). The federated network node **1001** may send the composed response (or the combined response).

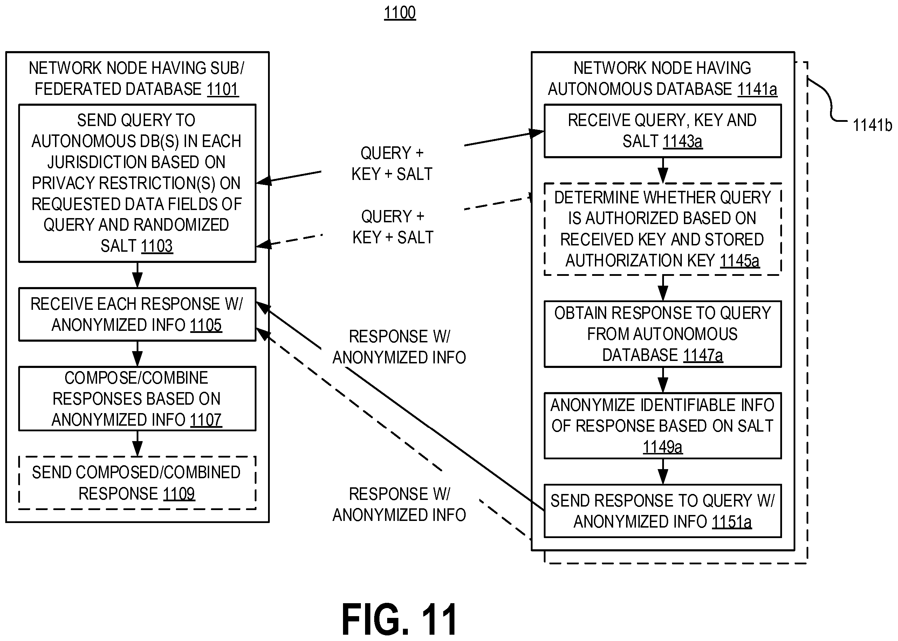

**FIG. 11** illustrates another embodiment of a system **1100** for querying a federated database in accordance with various aspects as described herein. In **FIG. 11****,** the system **1100** includes a network node **1101** having a federated or sub-federated database and a network node **1141a** having an autonomous database that is located in a certain jurisdiction. The sub/federated network node **1101** sends a query, a randomized salt for that query, and an optional key **1161a** to the autonomous network node **1141a,** as represented by block **1103.**

In **FIG. 11****,** the autonomous network node **1141a** receives the query, the randomized salt, and the optional key , as represented by block **1143a.** The autonomous network node **1141a** may determine whether the query is authorized based on the received key and an authorization key stored in the autonomous network node **1141a,** as represented by block **1145a.** The autonomous network node **1141a** obtains a response to the query from its autonomous database, as represented by block **1147a.** Further, the autonomous network node **1141a** anonymizes the identifiable information in the response based on the received salt, as represented by block **1149a.** The autonomous network node **1141a** then sends the response having the anonymized information to the sub/federated network node **1101,** as represented by block **1151a.** The sub/federated network node **1101** receives the response, as represented by block **1105.** Also, the sub/federated network node **1101** composes a response based on the received response and the anonymized information, as represented by block **1109.** The sub/federated network node **1101** may then send the composed response, as represented by block **1109.**

In another embodiment, the federated network node **1101** sends the query, the randomized salt, and the optional key to the autonomous network nodes **1141a, 1141b.** The autonomous network nodes **1141a, 1141b** may be located in the same jurisdiction or different jurisdictions. Each autonomous network node **1141a, 1141b** receives the query, the randomized salt, and the optional key and may determine whether the query is authorized based on the received key and the authorization key stored in that autonomous network node **1141a, 1141b.** Each autonomous network node **1141a, 1141b** obtains the response to the query from its autonomous database. Further, each autonomous network node **1141a, 1141b** anonymizes the identifiable information in its response based on the received salt. Each autonomous network node **1141a, 1141b** then sends the response having the anonymized information to the federated network node **1101.** The federated network node **1101** receives each response and combines the responses to the query based on the anonymized information, as represented by respective blocks **1105, 1107.** The federated network node **1101** may then send the combined response such as to a client device, as represented by block **1109.**

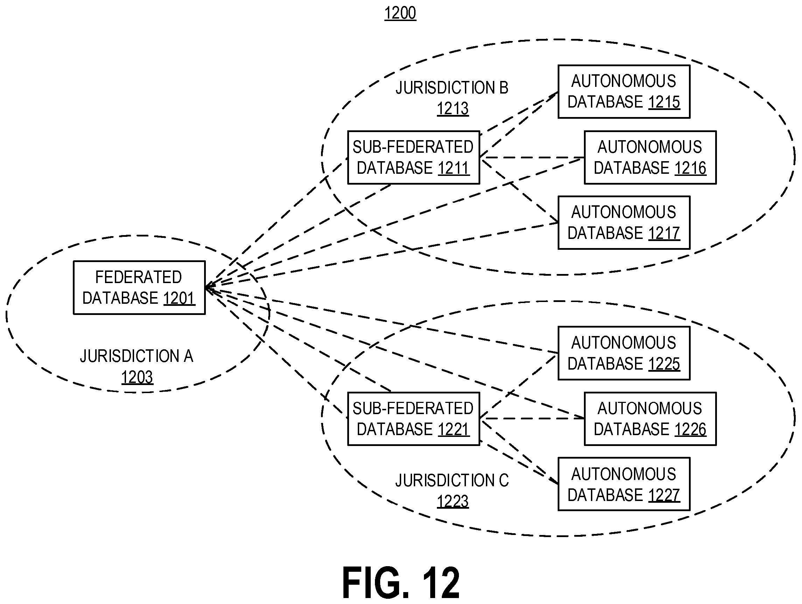

**FIG. 12** illustrates another embodiment of a system **1200** for querying a federated database in accordance with various aspects as described herein. In **FIG. 12****,** a federated database **1201** is located in jurisdiction **1203.** The federated database **1201** represents sub-federated databases **1211, 1221** located in respective jurisdictions **1213, 1223.** Further, each sub-federated database **1211, 1221** represents respective autonomous databases **1215-1217, 1225-1227** located in respective jurisdictions **1211, 1221.** The federated database **1201** also represents via the sub-federated databases **1211, 1211** these respective autonomous databases.

In one embodiment, the federated database **1201** represents a first sub-federated database **1211** having one or more first autonomous databases **1215-1217** that are located in a first jurisdiction **1213** with one or more first privacy restrictions.

Additionally or alternatively, the federated database **1201** represents a second sub-federated database **1223** having one or more second autonomous databases **1225-1227** that are located in a second jurisdiction **1223** with one or more second privacy restrictions.

In another embodiment, the federated database **1201** represents a single autonomous database **1215** that is located in a certain jurisdiction **1213** with one or more privacy restrictions.

In another embodiment, the federated database **1201** represents a plurality of autonomous databases **1215-1217** that are located in a same jurisdiction **1213** with one or more privacy restrictions.

In another embodiment, the federated database **1201** represents a plurality of autonomous databases **1215-1217, 1225-1227** that are located in different jurisdictions **1213, 1223** with one or more different privacy restrictions.

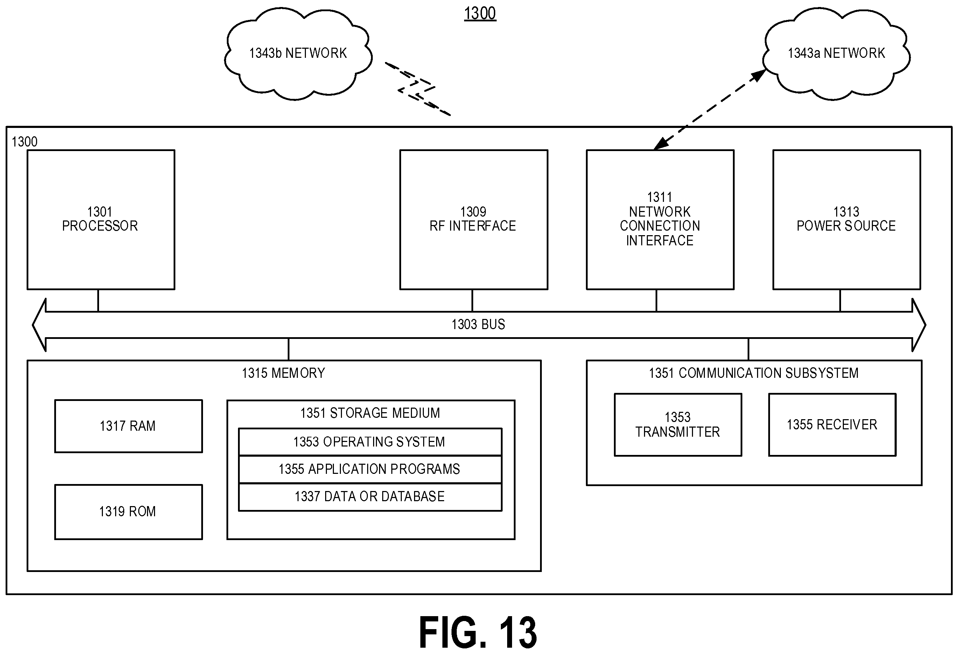

**FIG. 13** illustrates another embodiment of a network node in accordance with various aspects as described herein. In some instances, the network node **1300** may be referred as a server, a base station, a core network node, a handheld computer, a desktop computer, a laptop computer, a tablet computer, a set-top box, a television, an appliance, a medical device, or some other like terminology. In other instances, the network node **1300** may be a set of hardware components. In **FIG. 13****,** the network node **1300** may be configured to include a processor **1301** that is operatively coupled to a radio frequency (RF) interface **1309,** a network connection interface **1311,** a memory **1315** including a random access memory (RAM) **1317,** a read only memory (ROM) **1319,** a storage medium **1331** or the like, a communication subsystem **1351,** a power source **1333,** another component, or any combination thereof. The memory **1315** may be used to store one or more databases. The storage medium **1331** may include an operating system **1333,** an application program **1335,** data or database **1337,** or the like. Specific devices may utilize all of the components shown in **FIG. 13****,** or only a subset of the components, and levels of integration may vary from device to device. Further, specific devices may contain multiple instances of a component, such as multiple processors, memories, transceivers, transmitters, receivers, etc. For instance, a computing device may be configured to include a processor and a memory.

In **FIG. 13****,** the processor **1301** may be configured to process computer instructions and data. The processor **1301** may be configured as any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored-program, general-purpose processors, such as a microprocessor or Digital Signal Processor (DSP), together with appropriate software; or any combination of the above. For example, the processor **1301** may include two computer processors. In one definition, data is information in a form suitable for use by a computer. It is important to note that a person having ordinary skill in the art will recognize that the subject matter of this disclosure may be implemented using various operating systems or combinations of operating systems.

In **FIG. 13****,** the RF interface **1309** may be configured to provide a communication interface to RF components such as a transmitter, a receiver, and an antenna. The network connection interface **1311** may be configured to provide a communication interface to a network **1343a.** The network **1343a** may encompass wired and wireless communication networks such as a local-area network (LAN), a wide-area network (WAN), a computer network, a wireless network, a telecommunications network, another like network or any combination thereof. For example, the network **1343a** may be a Wi-Fi network. The network connection interface **1311** may be configured to include a receiver and a transmitter interface used to communicate with one or more other nodes over a communication network according to one or more communication protocols known in the art or that may be developed, such as Ethernet, TCP/IP, SONET, ATM, or the like. The network connection interface **1311** may implement receiver and transmitter functionality appropriate to the communication network links (e.g., optical, electrical, and the like). The transmitter and receiver functions may share circuit components, software or firmware, or alternatively may be implemented separately.

In this embodiment, the RAM **1317** may be configured to interface via the bus **1303** to the processor **1301** to provide storage or caching of data or computer instructions during the execution of software programs such as the operating system, application programs, and device drivers. The ROM **1319** may be configured to provide computer instructions or data to the processor **1301.** For example, the ROM **1319** may be configured to be invariant low-level system code or data for basic system functions such as basic input and output (I/O), startup, or reception of keystrokes from a keyboard that are stored in a non-volatile memory. The storage medium **1331** may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, flash drives. In one example, the storage medium **1331** may be configured to include an operating system **1333,** an application program **1335** such as a web browser application, a widget or gadget engine or another application, and a data file **1337.**

In **FIG.** 13, the processor **1301** may be configured to communicate with a network **1343b** using the communication subsystem **1351.** The network **1343a** and the network **1343b** may be the same network or networks or different network or networks. The communication subsystem **1351** may be configured to include one or more transceivers used to communicate with the network **1343b.** The one or more transceivers may be used to communicate with one or more remote transceivers of another network node or client device according to one or more communication protocols known in the art or that may be developed, such as IEEE 802.xx, CDMA, WCDMA, GSM, LTE, NR, NB loT, UTRAN, WiMax, or the like.

In another example, the communication subsystem **1351** may be configured to include one or more transceivers used to communicate with one or more remote transceivers of another network node or client device according to one or more communication protocols known in the art or that may be developed, such as IEEE 802.xx, CDMA, WCDMA, GSM, LTE, NR, NB loT, UTRAN, WiMax, or the like. Each transceiver may include a transmitter **1353** or a receiver **1355** to implement transmitter or receiver functionality, respectively, appropriate to the RAN links (e.g., frequency allocations and the like). Further, the transmitter **1353** and the receiver **1355** of each transceiver may share circuit components, software, or firmware, or alternatively may be implemented separately.

In the current embodiment, the communication functions of the communication subsystem **1351** may include data communication, voice communication, multimedia communication, short-range communications such as Bluetooth, near-field communication, location-based communication such as the use of the global positioning system (GPS) to determine a location, another like communication function, or any combination thereof. For example, the communication subsystem **1351** may include cellular communication, Wi-Fi communication, Bluetooth communication, and GPS communication. The network **1343b** may encompass wired and wireless communication networks such as a local-area network (LAN), a wide-area network (WAN), a computer network, a wireless network, a telecommunications network, another like network or any combination thereof. For example, the network **1343b** may be a cellular network, a Wi-Fi network, and a near-field network. The power source **1313** may be configured to provide an alternating current (AC) or direct current (DC) power to components of the network node **1300.**

In **FIG. 13****,** the storage medium **1331** may be configured to include a number of physical drive units, such as a redundant array of independent disks (RAID), a floppy disk drive, a flash memory, a USB flash drive, an external hard disk drive, thumb drive, pen drive, key drive, a high-density digital versatile disc (HD-DVD) optical disc drive, an internal hard disk drive, a Blu-Ray optical disc drive, a holographic digital data storage (HDDS) optical disc drive, an external mini-dual in-line memory module (DIMM) synchronous dynamic random access memory (SDRAM), an external micro-DIMM SDRAM, a smartcard memory such as a subscriber identity module or a removable user identity (SIM/RUIM) module, other memory, or any combination thereof. The storage medium **1331** may allow the network node **1300** to access computer-executable instructions, application programs or the like, stored on transitory or non-transitory memory media, to off-load data, or to upload data. An article of manufacture, such as one utilizing a communication system may be tangibly embodied in storage medium **1331,** which may comprise a computer-readable medium.

The functionality of the methods described herein may be implemented in one of the components of the network node **1300** or partitioned across multiple components of the network node **1300.** Further, the functionality of the methods described herein may be implemented in any combination of hardware, software or firmware. In one example, the communication subsystem **1351** may be configured to include any of the components described herein. Further, the processor **1301** may be configured to communicate with any of such components over the bus **1303.** In another example, any of such components may be represented by program instructions stored in memory that when executed by the processor **1301** performs the corresponding functions described herein. In another example, the functionality of any of such components may be partitioned between the processor **1301** and the communication subsystem **1351.** In another example, the non-computative-intensive functions of any of such components may be implemented in software or firmware and the computative-intensive functions may be implemented in hardware.

Those skilled in the art will also appreciate that embodiments herein further include corresponding computer programs.

A computer program comprises instructions which, when executed on at least one processor of an apparatus, cause the apparatus to carry out any of the respective processing described above. A computer program in this regard may comprise one or more code modules corresponding to the means or units described above.

Embodiments further include a carrier containing such a computer program. This carrier may comprise one of an electronic signal, optical signal, radio signal, or computer readable storage medium.

In this regard, embodiments herein also include a computer program product stored on a non-transitory computer readable (storage or recording) medium and comprising instructions that, when executed by a processor of an apparatus, cause the apparatus to perform as described above.

Embodiments further include a computer program product comprising program code portions for performing the steps of any of the embodiments herein when the computer program product is executed by a computing device. This computer program product may be stored on a computer readable recording medium.

Additional embodiments will now be described. At least some of these embodiments may be described as applicable in certain contexts and/or wireless network types for illustrative purposes, but the embodiments are similarly applicable in other contexts and/or wireless network types not explicitly described.

As previously mentioned, current federated, sub-federated, and autonomous databases do not consider jurisdictional laws when performing queries. Accordingly, this disclosure describes embodiments to this problem, including using different methods of performing statistical queries for when data needs to be combined based on personal identifiable information between database systems within or between jurisdictions.

In one exemplary embodiment, queries are sent to a modified federated database system that adapts the queries and responses based on formalized jurisdictional regulations, including any other adaption needed to combine the database systems. The autonomous databases annotate the data with the type of information it contains such as with tags like "identifying information," "sensitive information," "general information," "export restriction to jurisdiction X," "only non-commercial use," "reduced resolution may be exported" (e.g., location, images, numbers like income), and the like. These tags formalize the processing/transactions by the federated or sub-federated databases for the associated data. Accordingly, the federated or sub-federated database receives these tags from the autonomous databases to inform the federated or sub-federated database how to adapt the queries.

In another embodiment, for queries that require statistical operations within a database system having a federated or sub-federated database that represents one more autonomous databases that are located in the same or different jurisdictions and each identifying information is in one of the autonomous databases, the federated or sub-federated database sends the query to each autonomous database. Further, the federated or sub-federated database receives the results from each autonomous database and then combines the results based on one or more statistical operations. For instance, for a query associated with counting visits to a web-page based on data from several autonomous databases (e.g., with a log of identity, time, and web page), the federated or sub-federated database performs the counting in each response to the query and then combine the counts. These statistical operations may be associated with median, average, sum, advanced filtering utilizing several databases, or the like. Further, these statistical operations may be associated with vectors, tables, columns, or the like.

In another embodiment, for a query that receives responses from different jurisdictions, including from a jurisdiction that requires combining responses from autonomous databases in that jurisdiction and that allow such combining, a database hierarchy may be used comprising of a federated database having one or more sub-federated databases in different jurisdictions, with each sub-federated database representing one or more autonomous databases in the same jurisdiction. For example, this hierarchy may be used to count visits to a web-page from persons in different jurisdictions (e.g., different rural areas). Further, each sub-federated database combines the responses to the query received from each autonomous database that is in the same jurisdiction. The federated database then combines the responses from each sub-federated database.

In another embodiment, the federated database sends the query to each sub-federated database. Each sub-federated database divides the query to extract any identifying information. For instance, for a query associated with counting visits to a webpage from rural addresses based on data from a sub-federated database that represents a first autonomous database with webpage visits, a log of the identity of each webpage visitor and the time of each webpage visit, and a second autonomous database, in the same jurisdiction as the first autonomous database, with the identity of each webpage visitor, the address of each webpage visitor, and an indication of whether each address is a rural address, the sub-federated database will divide the query to extract the identifying information from each count that has visited the webpage. As such, the sub-federated database sends the divided query to the second database and receives the identities of the rural addresses. Further, the sub-federated database adds the individual counts from the rural addresses into a sub-total count, which is sent to the federated database. The federated database adds the sub-total counts from each sub-federated database to obtain a total count.

Additionally or alternatively, for a federated database that combines responses from autonomous or sub-federated databases in different jurisdictions, the autonomous or sub-federated databases may anonymize the responses to queries before the federated database combines the responses. A one-way cryptographic hash function that uses a random salt may be utilized, with a new salt used for each query to generate the anonymized information. Further, any and all records of the salt may be destroyed at the completion of processing each query (one query may contain e.g. several SQL statements, not limited to only one statement) by the federated or sub-federated database. Accordingly, only during the processing of the query is it possible to derive the identifiable information from the anonymized information. Further, given the computationally complexity of deriving the identifiable information from the anonymized information, it is unlikely that the identifiable information could be derived during this brief query processing duration.

Furthermore, the federated database creates the random salt and sends it with each query or sub-query to the autonomous or sub-federated database. Further, the database hierarchy of federated, sub-federated, and autonomous databases uses the same one-way cryptographic hash function with the salt to anonymize the identifiable information that is sent with each response. Hence, the federated database receives responses from the autonomous or sub-federated databases that have the same anonymized information that corresponds to the same identifiable information, allowing, for instance, counting visits to a webpage for each rural address based on the anonymized information for that rural address.

In one example, a query related to counting the number of visits to a webpage that result in buying from that webpage is processed by a federated database. The federated database represents a first autonomous database with webpage visit logs, with the first database being in a jurisdiction where the identifying information is not allowed to be exported from that jurisdiction. Further, a second autonomous database has credit card information, with the second database being in a different jurisdiction from the first database, and the identifiable information is not allowed to be exported from that jurisdiction. Also, the first and second databases contain the same identifiable information. The federated database generates a randomized salt for a first query and sends the first query and the randomized salt to the first database. The first database receives the first query and salt, obtains a response to the first query associated with the webpage visit logs, anonymizes the identifiable information (e.g., visitor's name) of the response based on the randomized salt and a one-way cryptographic hash function, and sends the response with the anonymized information to the federated database.

In addition, the federated database sends a second query and the randomized salt to the second database. The second database receives the second query and salt, obtains a response to the query associated with the credit card information, anonymizes the identifiable information (e.g., credit card owner) of the response based on the randomized salt and a one-way cryptographic hash function, and sends the response with the anonymized information to the federated database. The federated database combines the received responses based on the anonymized information.

The one-way cryptographic hash function may be applied to data categories other than identifiable information, which may also be combined by the federated database. Further, this combining process may be applied to category-based data. For instance, category-based data may include medical diagnosis data, reduced-resolution location, city, or the like. In addition, the federated database system may cluster or combine the category-based data so that the particular diagnosis or city cannot be identified from the cluster or combination.

In another embodiment, homomorphic encryption schemes may be used for other one-way functions for sensitive scalar information. This allows responses with this sensitive encrypted scalar information to be compared (e.g., greater than, less than, equivalent to, and the like) by the federated database. This requires the autonomous databases to use the same homomorphic encryption schemes and keys. A randomized salt may be provided by the federated database system to the autonomous or sub-federated databases in the same manner as previously described.

A query should be understood to include a structured query language (SQL) query, non-SQL (NOSQL) query, graph database query, relational database query, analytic query (e.g., Spark or Hadoop), machine learning query, deep learning query, web-based front-end to information query, and the like.

The annotation could be done manually or automatically based on the actual data. One example of the latter is a name or an address may automatically be recognized as identifying information, medical records or location information could be identified as sensitive information, images that show faces could be annotated only non-commercial use, etc.

The various aspects described herein may be implemented using standard programming or engineering techniques to produce software, firmware, hardware (e.g., circuits), or any combination thereof to control a computing device to implement the disclosed subject matter. It will be appreciated that some embodiments may be comprised of one or more generic or specialized processors such as microprocessors, digital signal processors, customized processors and field programmable gate arrays (FPGAs) and unique stored program instructions (including both software and firmware) that control the one or more processors to implement, in conjunction with certain non-processor circuits, some, most, or all of the functions of the methods, devices and systems described herein. Alternatively, some or all functions could be implemented by a state machine that has no stored program instructions, or in one or more application specific integrated circuits (ASICs), in which each function or some combinations of certain of the functions are implemented as custom logic circuits. Of course, a combination of the two approaches may be used. Further, it is expected that one of ordinary skill, notwithstanding possibly significant effort and many design choices motivated by, for example, available time, current technology, and economic considerations, when guided by the concepts and principles disclosed herein will be readily capable of generating such software instructions and programs and ICs with minimal experimentation.

The term "article of manufacture" as used herein is intended to encompass a computer program accessible from any computing device, carrier, or media. For example, a computer-readable medium may include: a magnetic storage device such as a hard disk, a floppy disk or a magnetic strip; an optical disk such as a compact disk (CD) or digital versatile disk (DVD); a smart card; and a flash memory device such as a card, stick or key drive. Additionally, it should be appreciated that a carrier wave may be employed to carry computer-readable electronic data including those used in transmitting and receiving electronic data such as electronic mail (e-mail) or in accessing a computer network such as the Internet or a local area network (LAN). Of course, a person of ordinary skill in the art will recognize many modifications may be made to this configuration without departing from the scope of the subject matter defined in the appended claims.

Throughout the specification and the embodiments, the following terms take at least the meanings explicitly associated herein, unless the context clearly dictates otherwise. Relational terms such as "first" and "second," and the like may be used solely to distinguish one entity or action from another entity or action without necessarily requiring or implying any actual such relationship or order between such entities or actions. The term "or" is intended to mean an inclusive "or" unless specified otherwise or clear from the context to be directed to an exclusive form. Further, the terms "a," "an," and "the" are intended to mean one or more unless specified otherwise or clear from the context to be directed to a singular form. The term "include" and its various forms are intended to mean including but not limited to. References to "one embodiment," "an embodiment," "example embodiment," "various embodiments," and other like terms indicate that the embodiments of the disclosed technology so described may include a particular function, feature, structure, or characteristic, but not every embodiment necessarily includes the particular function, feature, structure, or characteristic. Further, repeated use of the phrase "in one embodiment" does not necessarily refer to the same embodiment, although it may. The terms "substantially," "essentially," "approximately," "about" or any other version thereof, are defined as being close to as understood by one of ordinary skill in the art, and in one non-limiting embodiment the term is defined to be within 10%, in another embodiment within 5%, in another embodiment within 1% and in another embodiment within 0.5%. A device or structure that is "configured" in a certain way is configured in at least that way, but may also be configured in ways that are not listed.

## Claims

1. A method performed by a network node (121, 221, 300, 400, 901, 1001, 1101, 1201, 1300) having a federated database that represents directly, or indirectly via a sub-federated database (1041, 1211, 1221), one or more autonomous databases (141, 241, 243, 600, 700, 941a-b, 1041, 1141a-b, 1215-1217, 1225-1227) that are located in a same or different jurisdiction, the method comprising:
obtaining (505a) a query that is related to identifiable information stored in at least one autonomous database or that is determinable from a combination of responses to the query received from at least two autonomous or sub-federated databases;
adapting (509a) the query for each autonomous or sub-federated database based on one or more privacy restrictions for the jurisdiction of that autonomous or sub-federated database, wherein said adapting the query includes:
- determining (509b) a randomized salt for the query, wherein the adapted query for each autonomous or sub-federated database includes the query and the salt so that each autonomous or sub-federated database is operable to anonymize the identifiable information in each response to that query based on the salt;
sending (511a), by the network node, to each autonomous or sub-federated database, the adapted query for that database;
receiving (513a), by the network node, from each autonomous or sub-federated database, a response to the corresponding adapted query; and
composing (515a) an adapted response to the query based on the responses received from each autonomous or sub-federated database so that the adapted response meets the one or more privacy restrictions for the jurisdiction of each autonomous or sub-federated database, wherein said composing includes combining (515b) the responses to the adapted queries from the autonomous or sub-federated databases based on anonymized information received in each response, with the anonymized information being the identifiable information that is anonymized by each database based on the randomized salt received from the network node for that query;
the method further comprising:
deleting (519b) the salt for the query responsive to said combining so that an ability to determine the identifiable information from the anonymized information only occurs between receiving the anonymized information from each autonomous or sub-federated database and said deleting.

2. The method of claim 1, wherein the anonymized information is associated with a cryptographically-secure hash function and the salt.

3. The method of any of claims 1-2, wherein said composing includes performing a statistical operation on each received response or a combination of the received responses so that the adapted response includes one or more statistical values.

4. The method of any of claims 1-3, wherein said composing includes performing a comparison operation on the received responses or a combination of the received responses so that the adapted response includes one or more comparison values or indications.

5. The method of any of claims 1-4, wherein said adapting includes:
identifying (507a) one or more data fields of the query that correspond to the identifiable information based on the one or more privacy restrictions for the jurisdiction of that database.

6. The method of any of claims 1-5, further comprising:
receiving (503a), by the network node, from each autonomous or sub-federated database, the one or more privacy restrictions for the corresponding jurisdiction.

7. The method of any of claims 1-6, wherein said obtaining includes receiving, by the network node, from a client device, the query.

8. The method of any of claims 1-7, further comprising:
sending (517a), by the network node, to a client device, the adapted response.

9. The method of claim 8, wherein said sending is responsive to determining that the client device is in a same jurisdiction as the network node.

10. The method of any of claims 1-9, further comprising:
receiving (501a), by the network node, from each autonomous or sub-federated database, an authorization key from that database that authorizes the federated database to query that database in conformance with the one or more privacy restrictions for the jurisdiction of that database.

11. A network node (121, 221, 300, 400, 901, 1001, 1101, 1201, 1300) having a federated database that represents directly, or indirectly via a sub-federated database (1041, 1211, 1221), one or more autonomous databases (141, 241, 243, 600, 700, 941a-b, 1041, 1141a-b, 1215-1217, 1225-1227, 1300) that are located in a same or different jurisdiction, the network node configured to:
obtain (505a) a query that is related to identifiable information stored in at least one autonomous database or that is determinable from a combination of responses to the query received from at least two autonomous or sub-federated databases;
adapt (509a) the query for each autonomous or sub-federated database based on one or more privacy restrictions for the jurisdiction of that autonomous or sub-federated database, wherein said adapting the query includes:
- determining (509b) a randomized salt for the query, wherein the adapted query for each autonomous or sub-federated database includes the query and the salt so that each autonomous or sub-federated database is operable to anonymize the identifiable information in each response to that query based on the salt;
send (511a), to each autonomous or sub-federated database, the adapted query for that database;
receive (513a), from each autonomous or sub-federated database, a response to the corresponding adapted query; and
compose (515a) an adapted response to the query based on the responses received from each autonomous or sub-federated database so that the adapted response meets the one or more privacy restrictions for the jurisdiction of each autonomous or sub-federated database, wherein said composing includes:
- combining (515b) the responses to the adapted queries from the autonomous or sub-federated databases based on anonymized information received in each response, with the anonymized information being the identifiable information that is anonymized by each database based on the randomized salt
received from the network node for that query; and
the network node (121, 221, 300, 400, 901, 1001, 1101, 1201, 1300) being further configured to:
deleting (519b) the salt for the query responsive to said combining so that an ability to determine the identifiable information from the anonymized information only occurs between receiving the anonymized information from each autonomous or sub-federated database and said deleting.

12. The network node of claim 11, configured to perform the method of any of claims 2-10.

## Patentansprüche

1. Verfahren, das von einem Netzwerkknoten (121, 221, 300, 400, 901, 1001, 1101, 1201, 1300) durchgeführt wird, der eine Verbunddatenbank aufweist, die direkt oder indirekt über eine Unterverbunddatenbank (1041, 1211, 1221) eine oder mehrere autonome Datenbanken (141, 241, 243, 600, 700, 941a-b, 1041, 1141a-b, 1215-1217, 1225-1227) repräsentiert, die sich in einer gleichen oder unterschiedlichen Gerichtsbarkeit befinden, das Verfahren umfassend:
Erhalten (505a) einer Abfrage, die sich auf identifizierbare Informationen bezieht, die in mindestens einer autonomen Datenbank gespeichert sind, oder die aus einer Kombination von Antworten auf die Abfrage bestimmt werden kann, die von mindestens zwei autonomen oder Unterverbundsdatenbanken empfangen wurden;
Anpassen (509a) der Abfrage für jede autonome oder Unterverbandsdatenbank basierend auf einer oder mehreren Datenschutzbeschränkungen für die Gerichtsbarkeit dieser autonomen oder Unterverbandsdatenbank, wobei das Anpassen der Abfrage Folgendes einschließt:
- Bestimmen (509b) eines randomisierten Salzes für die Abfrage, wobei die angepasste Abfrage für jede autonome oder Unterverbundsdatenbank die Abfrage und das Salz einschließt, sodass jede autonome oder Unterverbundsdatenbank in der Lage ist, die identifizierbaren Informationen in jeder Antwort auf diese Abfrage basierend auf dem Salz zu anonymisieren;
Senden (511a) der angepassten Abfrage für jede autonome oder Unterverbundsdatenbank durch den Netzwerkknoten;
Empfangen (513a) einer Antwort auf die entsprechende angepasste Abfrage von jeder autonomen oder Unterverbundsdatenbank durch den Netzwerkknoten; und
Zusammenstellen (515a) einer angepassten Antwort auf die Abfrage basierend auf den von jeder autonomen oder Unterverbundsdatenbank empfangenen Antworten, sodass die angepasste Antwort die eine oder mehrere Datenschutzbeschränkungen für die Zuständigkeit jeder autonomen oder Unterverbundsdatenbank erfüllt, wobei das Zusammensetzen das Kombinieren (515b) der Antworten auf die angepassten Abfragen von den autonomen oder Unterverbundsdatenbanken basierend auf der in jeder Antwort empfangenen anonymisierten Information einschließt, wobei die anonymisierte Information die identifizierbare Information ist, die von jeder Datenbank basierend auf dem vom Netzwerkknoten für diese Abfrage empfangenen randomisierten Salz anonymisiert wird;
das Verfahren ferner umfassend:
Löschen (519b) des Salzes für die Abfrage als Antwort auf das Kombinieren, sodass eine Fähigkeit, die identifizierbaren Informationen aus den anonymisierten Informationen zu bestimmen, nur zwischen dem Empfang der anonymisierten Informationen von jeder autonomen oder Unterverbundsdatenbank und dem Löschen auftritt.

2. Verfahren nach Anspruch 1, wobei die anonymisierte Information mit einer kryptographisch sicheren Hashfunktion und dem Salz verbunden ist.

3. Verfahren nach einem der Ansprüche 1 bis 3, wobei das Zusammensetzen das Durchführen einer statistischen Operation an jeder empfangenen Antwort oder einer Kombination der empfangenen Antworten einschließt, sodass die angepasste Antwort einen oder mehrere statistische Werte einschließt.

4. Verfahren nach einem der Ansprüche 1 bis 3, wobei das Zusammensetzen das Durchführen einer Vergleichsoperation an den empfangenen Antworten oder einer Kombination der empfangenen Antworten einschließt, sodass die angepasste Antwort einen oder mehrere Vergleichswerte oder -anzeigen einschließt.

5. Verfahren nach einem der Ansprüche 1 bis 4, wobei das Anpassen Folgendes einschließt:
Identifizieren (507a) eines oder mehrerer Datenfelder der Abfrage, die den identifizierbaren Informationen entsprechen, basierend auf der einen oder mehreren Datenschutzbeschränkungen für die Gerichtsbarkeit dieser Datenbank.

6. Verfahren nach einem der Ansprüche 1 bis 5, ferner umfassend:
Empfangen (503a), durch den Netzwerkknoten, von jeder autonomen oder Unterverbundsdatenbank, der einen oder mehreren Datenschutzbeschränkungen für die entsprechende Gerichtsbarkeit.

7. Verfahren nach einem der Ansprüche 1 bis 6, wobei das Erhalten das Empfangen der Abfrage durch den Netzwerkknoten von einer Clientvorrichtung einschließt.

8. Verfahren nach einem der Ansprüche 1 bis 7, ferner umfassend:
Senden (517a) der angepassten Antwort durch den Netzwerkknoten an eine Clientvorrichtung.

9. Verfahren nach Anspruch 8, wobei das Senden auf das Bestimmen reagiert, dass sich die Clientvorrichtung in derselben Gerichtsbarkeit wie der Netzwerkknoten befindet.

10. Verfahren nach einem der Ansprüche 1 bis 9, ferner umfassend:
Empfangen (501a) eines Autorisierungsschlüssels von jeder autonomen oder Unterverbundsdatenbank durch den Netzwerkknoten, der die Verbunddatenbank zur Abfrage dieser Datenbank gemäß der einen oder mehreren Datenschutzbeschränkungen für die Zuständigkeit dieser Datenbank autorisiert.

11. Netzwerkknoten (121, 221, 300, 400, 901, 1001, 1101, 1201, 1300), der eine Verbunddatenbank aufweist, die direkt oder indirekt über eine Unterverbundsdatenbank (1041, 1211, 1221) eine oder mehrere autonome Datenbanken (141, 241, 243, 600, 700, 941a-b, 1041, 1141a-b, 1215-1217, 1225-1227, 1300) repräsentiert, die sich in derselben oder einer anderen Gerichtsbarkeit befinden, wobei der Netzwerkknoten konfiguriert ist zum:
Erhalten (505a) einer Abfrage, die sich auf identifizierbare Informationen bezieht, die in mindestens einer autonomen Datenbank gespeichert sind, oder die aus einer Kombination von Antworten auf die Abfrage bestimmt werden kann, die von mindestens zwei autonomen oder Unterverbundsdatenbanken empfangen wurden;
Anpassen (509a) der Abfrage für jede autonome oder Unterverbandsdatenbank basierend auf einer oder mehreren Datenschutzbeschränkungen für die Gerichtsbarkeit dieser autonomen oder Unterverbandsdatenbank, wobei das Anpassen der Abfrage Folgendes einschließt:
- Bestimmen (509b) eines randomisierten Salzes für die Abfrage, wobei die angepasste Abfrage für jede autonome oder Unterverbundsdatenbank die Abfrage und das Salz einschließt, sodass jede autonome oder Unterverbundsdatenbank in der Lage ist, die identifizierbaren Informationen in jeder Antwort auf diese Abfrage basierend auf dem Salz zu anonymisieren;
Senden (511a) der angepassten Abfrage für jede autonome oder Unterverbundsdatenbank;
Empfangen (513a) einer Antwort auf die entsprechende angepasste Abfrage von jeder autonomen oder Unterverbundsdatenbank; und
Zusammenstellen (515a) einer angepassten Antwort auf die Abfrage basierend auf den von jeder autonomen oder Unterverbundsdatenbank empfangenen Antworten, sodass die angepasste Antwort die eine oder mehrere Datenschutzbeschränkungen für die Zuständigkeit jeder autonomen oder Unterverbundsdatenbank erfüllt, wobei das Zusammenstellen Folgendes einschließt:
- Kombinieren (515b) der Antworten auf die angepassten Abfragen aus den autonomen oder Unterverbundsdatenbanken basierend auf der in jeder Antwort empfangenen anonymisierten Information, wobei die anonymisierte Information die identifizierbare Information ist, die von jeder Datenbank basierend auf dem vom Netzwerkknoten für diese Abfrage empfangenen randomisierten Salz anonymisiert wird; und
der Netzwerkknoten (121, 221, 300, 400, 901, 1001, 1101, 1201, 1300) ferner konfiguriert ist zum:
Löschen (519b) des Salzes für die Abfrage als Antwort auf das Kombinieren, sodass eine Fähigkeit, die identifizierbaren Informationen aus den anonymisierten Informationen zu bestimmen, nur zwischen dem Empfang der anonymisierten Informationen von jeder autonomen oder Unterverbundsdatenbank und dem Löschen auftritt.

12. Netzwerkknoten nach Anspruch 11, der konfiguriert ist, um das Verfahren nach einem der Ansprüche 2 bis 10 durchzuführen.

## Revendications

1. Procédé mis en œuvre par un nœud de réseau (121, 221, 300, 400, 901, 1001, 1101, 1201, 1300) ayant une base de données fédérée qui représente directement, ou indirectement par l'intermédiaire d'une base de données sous-fédérée (1041, 1211, 1221), une ou plusieurs bases de données autonomes (141, 241, 243, 600, 700, 941a-b, 1041, 1141a-b, 1215-1217, 1225-1227) qui sont situées dans une juridiction identique ou différente, le procédé comprenant :
l'obtention (505a) d'une requête qui est apparentée à des informations identifiables stockées dans au moins une base de données autonome ou qui est déterminable à partir d'une combinaison de réponses à la requête reçues en provenance d'au moins deux bases de données autonomes ou sous-fédérées ;
l'adaptation (509a) de la requête pour chaque base de données autonome ou sous-fédérée en fonction d'une ou de plusieurs restrictions de confidentialité pour la juridiction de cette base de données autonome ou sous-fédérée, dans lequel ladite adaptation de la requête comporte :
- la détermination (509b) d'un sel randomisé pour la requête, dans lequel la requête adaptée pour chaque base de données autonome ou sous-fédérée comporte la requête et le sel de sorte que chaque base de données autonome ou sous-fédérée est fonctionnelle pour anonymiser les informations identifiables dans chaque réponse à cette requête en fonction du sel ;
l'envoi (511a), par le nœud de réseau, à chaque base de données autonome ou sous-fédérée, de la requête adaptée pour cette base de données ;
la réception (513a), par le nœud de réseau, en provenance de chaque base de données autonome ou sous-fédérée, d'une réponse à la requête adaptée correspondante ; et
la composition (515a) d'une réponse adaptée à la requête en fonction des réponses reçues en provenance de chaque base de données autonome ou sous-fédérée de sorte que la réponse adaptée satisfait à la ou aux restrictions de confidentialité pour la juridiction de chaque base de données autonome ou sous-fédérée, dans lequel ladite composition comporte la combinaison (515b) des réponses aux requêtes adaptées en provenance des bases de données autonomes ou sous-fédérées en fonction d'informations anonymisées reçues dans chaque réponse, les informations anonymisées étant les informations identifiables qui sont anonymisées par chaque base de données en fonction du sel randomisé reçu en provenance du nœud de réseau pour cette requête ;
le procédé comprenant en outre :
la suppression (519b) du sel pour la requête en réponse à ladite combinaison de sorte qu'une aptitude à déterminer les informations identifiables à partir des informations anonymisées se produit uniquement entre la réception des informations anonymisées en provenance de chaque base de données autonome ou sous-fédérée et ladite suppression.

2. Procédé selon la revendication 1, dans lequel les informations anonymisées sont associées à une fonction de hachage cryptographiquement sécurisée et au sel.

3. Procédé selon l'une quelconque des revendications 1 à 2, dans lequel ladite composition comporte la mise en œuvre d'une opération statistique sur chaque réponse reçue ou sur une combinaison des réponses reçues de sorte que la réponse adaptée comporte une ou plusieurs valeurs statistiques.

4. Procédé selon l'une quelconque des revendications 1 à 3, dans lequel ladite composition comporte la mise en œuvre d'une opération de comparaison sur les réponses reçues ou sur une combinaison des réponses reçues de sorte que la réponse adaptée comporte une ou plusieurs valeurs ou indications de comparaison.

5. Procédé selon l'une quelconque des revendications 1 à 4, dans lequel ladite adaptation comporte :
l'identification (507a) d'un ou de plusieurs champs de données de la requête qui correspondent aux informations identifiables en fonction de la ou des restrictions de confidentialité pour la juridiction de cette base de données.

6. Procédé selon l'une quelconque des revendications 1 à 5, comprenant en outre :
la réception (503a), par le nœud de réseau, en provenance de chaque base de données autonome ou sous-fédérée, de la ou des restrictions de confidentialité pour la juridiction correspondante.

7. Procédé selon l'une quelconque des revendications 1 à 6, dans lequel ladite obtention comporte la réception, par le nœud de réseau, en provenance d'un dispositif client, de la requête.

8. Procédé selon l'une quelconque des revendications 1 à 7, comprenant en outre :
l'envoi (517a), par le nœud de réseau, à un dispositif client, de la réponse adaptée.

9. Procédé selon la revendication 8, dans lequel ledit envoi réagit au fait de déterminer que le dispositif client est dans une même juridiction que le nœud de réseau.

10. Procédé selon l'une quelconque des revendications 1 à 9, comprenant en outre :
la réception (501a), par le nœud de réseau, en provenance de chaque base de données autonome ou sous-fédérée, d'une clé d'autorisation provenant de cette base de données qui autorise la base de données fédérée à faire une requête à cette base de données conformément à la ou aux restrictions de confidentialité pour la juridiction de cette base de données.

11. Nœud de réseau (121, 221, 300, 400, 901, 1001, 1101, 1201, 1300) ayant une base de données fédérée qui représente directement, ou indirectement par l'intermédiaire d'une base de données sous-fédérée (1041, 1211, 1221), une ou plusieurs bases de données autonomes (141, 241, 243, 600, 700, 941a-b, 1041, 1141a-b, 1215-1217, 1225-1227, 1300) qui sont situées dans une juridiction identique ou différente, le nœud de réseau étant configuré pour :
obtenir (505a) une requête qui est apparentée à des informations identifiables stockées dans au moins une base de données autonome ou qui est déterminable à partir d'une combinaison de réponses à la requête reçues en provenance d'au moins deux bases de données autonomes ou sous-fédérées ;
adapter (509a) la requête pour chaque base de données autonome ou sous-fédérée en fonction d'une ou de plusieurs restrictions de confidentialité pour la juridiction de cette base de données autonome ou sous-fédérée, dans lequel ladite adaptation de la requête comporte :
- la détermination (509b) d'un sel randomisé pour la requête, dans lequel la requête adaptée pour chaque base de données autonome ou sous-fédérée comporte la requête et le sel de sorte que chaque base de données autonome ou sous-fédérée est fonctionnelle pour anonymiser les informations identifiables dans chaque réponse à cette requête en fonction du sel ;
envoyer (511a), à chaque base de données autonome ou sous-fédérée, la requête adaptée pour cette base de données ;
recevoir (513a), en provenance de chaque base de données autonome ou sous-fédérée, une réponse à la requête adaptée correspondante ; et
composer (515a) une réponse adaptée à la requête en fonction des réponses reçues en provenance de chaque base de données autonome ou sous-fédérée de sorte que la réponse adaptée satisfait à la ou aux restrictions de confidentialité pour la juridiction de chaque base de données autonome ou sous-fédérée, dans lequel ladite composition comporte :
- la combinaison (515b) des réponses aux requêtes adaptées provenant des bases de données autonomes ou sous-fédérées en fonction d'informations anonymisées reçues dans chaque réponse, les informations anonymisées étant les informations identifiables qui sont anonymisées par chaque base de données en fonction du sel randomisé reçu en provenance du nœud de réseau pour cette requête ; et
le nœud de réseau (121, 221, 300, 400, 901, 1001, 1101, 1201, 1300) étant en outre configuré pour :
supprimer (519b) le sel pour la requête en réponse à ladite combinaison de sorte qu'une aptitude à déterminer les informations identifiables à partir des informations anonymisées se produit uniquement entre la réception des informations anonymisées en provenance de chaque base de données autonome ou sous-fédérée et ladite suppression.

12. Nœud de réseau selon la revendication 11, configuré pour mettre en œuvre le procédé selon l'une quelconque des revendications 2 à 10.
